(19) Europäisches Patentamt
European Patent Office
Office européen des brevets

(11) **EP 3 745 111 B1**

(12) **EUROPÄISCHE PATENTSCHRIFT**

(45) Veröffentlichungstag und Bekanntmachung des Hinweises auf die Patenterteilung:
**21.05.2025   Patentblatt 2025/21**

(21) Anmeldenummer: **19176748.2**

(22) Anmeldetag: **27.05.2019**

(51) Internationale Patentklassifikation (IPC):
**G01M 10/00** (2006.01)      **G09B 23/06** (2006.01)
**G09B 23/12** (2006.01)

(52) Gemeinsame Patentklassifikation (CPC):
**G01M 10/00; G09B 23/12**

(54) **VORRICHTUNG UND VERSUCHSMODUL ZUR DURCHFÜHRUNG VON STRÖMUNGSMECHANISCHEN VERSUCHEN**

DEVICE AND TEST MODULE FOR PERFORMING FLOW ASSAYS

DISPOSITIF ET MODULE D'ESSAI PERMETTANT DE METTRE EN OEUVRE DES ESSAIS MÉCANIQUES D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(43) Veröffentlichungstag der Anmeldung:
**02.12.2020   Patentblatt 2020/49**

(73) Patentinhaber: **G.U.N.T. Gerätebau GmbH**
**22885 Barsbüttel (DE)**

(72) Erfinder:
• **JESCHKE, Samuel**
  **23843 Bad Oldesloe (DE)**
• **JAHN, Leo**
  **23843 Bad Oldesloe (DE)**
• **HECKMANN, Christian**
  **22041 Hamburg (DE)**
• **SCHALLER, Michael**
  **22307 Hamburg (DE)**
• **JANNSEN, Daniel**
  **23847 Meddewade (DE)**
• **ABRAHAM, Detlef**
  **22297 Hamburg (DE)**

(74) Vertreter: **Hauck Patentanwaltspartnerschaft mbB**
**Postfach 11 31 53**
**20431 Hamburg (DE)**

(56) Entgegenhaltungen:
**DE-U1- 202015 106 972      US-A- 3 363 340**
**US-A- 5 324 956**

• **G.U.N.T GERÄTEBAU GMBH: "Equipment for engineering education. Fluid mechanics.", 31 December 2018 (2018-12-31), Retrieved from the Internet <URL:https://www.systemes-didactiques.fr/doc/catalogues/GU4-GUNT-GB.pdf>**

EP 3 745 111 B1

**Beschreibung**

Die Erfindung betrifft eine Vorrichtung und mindestens ein Versuchsmodul zur Durchführung von strömungsmechanischen Versuchen.

Die Vorrichtung und das Versuchsmodul dienen der technischen Ausbildung auf dem Gebiet der Strömungsmechanik insbesondere an Universitäten, Fachhochschulen und Technikerschulen.

Die Geräteserie HM 150 der G.U.N.T. Gerätebau GmbH (G.U.N.T. Gerätebau GmbH: "Equipment for engineering education. Fluid mechanics", 31. Dezember 2018 (2018-12-31), Gefunden im Internet: URL: https://www.systemes-didactiques.fr/doc/catalogues/GU4-GUNT-GB.pdf) umfasst ein Basismodul für strömungsmechanische Versuche, das auf einem fahrbaren, tragenden Gestell eine obere Arbeitsfläche aufweist, auf der verschiedene Versuchsgeräte positioniert werden können. Unten auf dem Gestell ist ein großer Vorratsbehälter für Versuchsflüssigkeit mit ca. 180 l Fassungsvermögen angeordnet, in dem sich eine Tauchpumpe befindet. Über einen Kugelhahn ist die Tauchpumpe mit einem Einlass im Boden einer Versuchsrinne in der Arbeitsfläche verbunden. Die Versuchsrinne kann für die Durchführung von Versuchen am Wehr genutzt werden. An die Versuchsrinne schließt sich ein Messbehälter an, der die Versuchsflüssigkeit auffängt. Aus einem Ablauf im Boden des Messbehälters gelangt die Versuchsflüssigkeit in den Vorratsbehälter zurück. Für andere Versuche gibt es eine Vielzahl von Versuchsgeräten, die jeweils individuelle Rahmen, Träger oder Platten aufweisen, mit denen sie auf der Arbeitsfläche des Basismoduls positionierbar sind. An den Einlass der Versuchsrinne ist ein Schlauch zum Verbinden der Tauchpumpe mit einem auf die Arbeitsfläche aufgesetzten Versuchsgerät anschließbar. Aus einem Überlauf oder einem anderen Auslass des Versuchsgerätes gelangt die Versuchsflüssigkeit in den Messbehälter. Der Mengenstrom wird mittels des Kugelhahnes eingestellt. Zur Ermittlung des Mengenstromes ist an den Messbehälter eine Füllstandsanzeige angeschlossen und sein Ablauf mittels eines Schiebers schließbar. Nach Schließen des Schiebers wird innerhalb eines mit der Stoppuhr genommenen Zeitraumes der Füllstand gemessen und daraus der Mengenstrom ermittelt. Einige Versuchsgeräte sind mit analogen Druckmessgeräten ausgestattet, die während der Versuche abgelesen werden müssen. Die Ergebnisse müssen auf Papier notiert werden. Einzelheiten über den Betrieb der Geräteserie und die Versuchsdurchführung sind der schriftlichen Gebrauchsanweisung zu entnehmen.

Die Versuchsdurchführung, insbesondere die Messung des Mengenstromes, ist zeitaufwendig und ungenau. Die Pumpe läuft immer mit voller Leistung, sodass der Energieverbrauch hoch ist und die Drosselung des Mengenstromes mittels des Kugelhahnes eine entsprechende Erwärmung der Versuchsflüssigkeit bewirkt. Diese Änderung der Versuchsbedingungen erschwert die Versuchsdurchführung und beeinträchtigt die Messergebnisse. Die Versuchsflüssigkeit kann in dem offenen System leicht verschmutzen. Das Basismodul und die Versuchsgeräte haben einen großen Platzbedarf.

Das Versuchsmodul HM 150.21 zur Visualisierung von Strömungslinien in einem offenen Kanal weist unten einen offenen Rahmen zum Aufsetzen auf der Stellfläche des Wanneneinsatzes des Versuchsgerätes HM 150 auf. Aus einem offenen Experimentierkanal läuft Wasser über ein Wehr über und fällt durch einen nicht von dem offenen Rahmen des Versuchsmoduls abgedeckten Bereich in eine Öffnung des Messbehälters des Versuchsgerätes HM 150 hinein.

Die DE 20 2015 106 972 U1 beschreibt ein Versuchsgerät zur Untersuchung von Strömungsfeldern, das auf einem fahrbaren Gestell einen vertikalen Strömungskanal mit einer durchsichtigen Frontplatte aufweist, das in eine Umlaufleitung integriert ist, in der eine Pumpe zum Pumpen von Versuchsflüssigkeit im Kreislauf angeordnet ist. Im Strömungskanal befindet sich mindestens ein Versuchskörper. Mittels einer linienförmigen Elektrode unterhalb des Versuchskörpers und einer weiteren Elektrode im Strömungskanal mit einer damit verbundenen elektrischen Spannungsversorgung werden in der Versuchsflüssigkeit elektrolytisch Gasbläschen erzeugt, die der Strömung der Versuchsflüssigkeit folgen. Das Versuchsgerät hat einen großen Platzbedarf und ist auf die Untersuchung von Strömungsfeldern spezialisiert.

Die US 5,324,956 beschreibt ein System zur Charakterisierung des Drucks, der Temperatur, der Bewegung und der Strömungsmuster eines Fluids unter hohem Druck innerhalb einer Testzelle. Die Testzelle ist innen mit einstellbaren Felsoberflächen ausgekleidet. Der Druck wird innerhalb der Testzelle unter Verwendung einer Vorrichtung gemessen, die druckverformbare optische Fasern verwendet. Fluidgeschwindigkeit, Strömungsrichtung und Filterkuchen-Aufbau werden mit Laser-Doppler-Geschwindigkeitsmessung gemessen. Die Temperatur des Fluids wird unter Verwendung einer Kombination von thermischen Sensoren geschätzt.

Davon ausgehend liegt der Erfindung die Aufgabe zugrunde, eine Vorrichtung und mindestens ein Versuchsmodul zur Durchführung von strömungsmechanischen Versuchen zur Verfügung zu stellen, die eine schnellere und genauere Durchführung einer Vielzahl unterschiedlicher strömungsmechanischer Versuche ermöglichen.

Die Aufgabe wird von einer Vorrichtung mit den Merkmalen von Anspruch 1 gelöst. Vorteilhafte Ausführungsarten der Vorrichtung sind in Unteransprüchen angegeben.

Die erfindungsgemäße Vorrichtung zur Durchführung von strömungsmechanischen Versuchen umfasst:

-   ein Tischgehäuse mit einer horizontalen oberen Gehäusewand mit einer Stellfläche an der Oberseite und einer darin ausgebildeten ersten Öffnung zum Aufsetzen eines Versuchsmoduls mit einer Basisplatte und einer darauf angeordneten Versuchsanordnung für strömungsmechanische Versuche,

- einen von außen zugänglichen ersten Anschluss für einen Schlauch an einer Gehäusewand, so dass der erste Anschluss mittels eines ersten Schlauches mit einem zweiten Anschluss des Versuchsmoduls zum Einspeisen von Versuchsflüssigkeit in die Versuchsanordnung verbindbar ist, wenn das Versuchsmodul auf die Stellfläche aufgesetzt ist,

- einen im Tischgehäuse angeordneten, wannenförmigen Vorratsbehälter für Versuchsflüssigkeit, der durch die erste Öffnung in der Stellfläche hindurch direkt von oben zugänglich ist, so dass Versuchsflüssigkeit aus der Versuchsanordnung durch einen Auslass der Versuchsanordnung an der Unterseite der Basisplatte hindurch in den Vorratsbehälter auslassbar ist, wenn das Versuchsmodul auf die Stellfläche aufgesetzt ist,

- eine im Tischgehäuse angeordnete erste Pumpe, die eingangsseitig mit dem Innenraum des Vorratsbehälters und ausgangsseitig mit dem ersten Anschluss verbunden ist,

- einen im Tischgehäuse angeordneten und mit der ersten Pumpe gekoppelten Elektromotor und

- eine im Tischgehäuse angeordnete und mit dem Elektromotor verbundene elektrische Steuerungseinrichtung, die ausgebildet ist, die Drehzahl der ersten Pumpe einzustellen.

Ferner wird die Aufgabe durch ein Versuchsmodul gemäß Anspruch 21 gelöst. Vorteilhafte Ausführungsarten des Versuchsmoduls sind in Unteransprüchen angegeben.

Das erfindungsgemäße Versuchsmodul für die Durchführung von strömungsmechanischen Versuchen umfasst eine Basisplatte zum Aufsetzen auf eine Stellfläche und Abdecken einer darin ausgebildeten ersten Öffnung zu einem Vorratsbehälter eines Versuchsgerätes, eine auf der Basisplatte angeordnete Versuchsanordnung für strömungsmechanische Versuche, einen zweiten Anschluss für die Einspeisung von Versuchsflüssigkeit mittels eines ersten Schlauches in die Versuchsanordnung und einen ersten Auslass für Versuchsflüssigkeit an der Unterseite der Basisplatte, der über eine Einrichtung zum Leiten von Versuchsflüssigkeit mit der Versuchsanordnung verbunden ist und/oder einen zweiten Auslass für Versuchsflüssigkeit oberhalb der Basisplatte zur Verbindung mit einer Abflussleitung.

Bei der erfindungsgemäßen Vorrichtung zur Durchführung von strömungsmechanischen Versuchen (auch "Vorrichtung" oder "Grundgerät" oder "Basisgerät" oder "Hauptgerät" genannt) ist die erste Öffnung des wannenförmigen Vorratsbehälters direkt durch die Stellfläche hindurch von oben zugänglich. Das erfindungsgemäße Versuchsmodul (auch "Modul" genannt) wird mit seiner Basisplatte auf die Stellfläche aufgesetzt, so dass es die erste Öffnung des Vorratsbehälters abdeckt und die Versuchsflüssigkeit durch den ersten Auslass an der Unterseite der Basisplatte direkt in den Vorratsbehälter abgibt. Infolgedessen werden nur verhältnismäßig geringe Mengen Versuchsflüssigkeit benötigt. Die Basisplatte verhindert ein Verspritzen von Versuchsflüssigkeit und das Eindringen von Verunreinigungen in die Versuchsflüssigkeit. Die Versuchsflüssigkeit wird von der im Tischgehäuse der Vorrichtung angeordneten Pumpe durch die Versuchsanordnung hindurchgepumpt. Hierfür ist der erste Anschluss der Vorrichtung über einen Schlauch mit dem zweiten Anschluss des Versuchsmoduls verbindbar. Über eine elektrische Steuerungseinrichtung und einen Elektromotor der Vorrichtung ist die Drehzahl der ersten Pumpe einstellbar, ohne dass durch Drosselung die Versuchsflüssigkeit erwärmt wird. Durch die geringe Gesamtmenge der Versuchsflüssigkeit und die fehlende Erwärmung durch Drosselung des Mengenstromes wird eine schnellere und genauere Durchführung von strömungsmechanischen Versuchen ermöglicht. Insbesondere können konstante Strömungsverhältnisse in der Versuchsanordnung schnell erreicht werden. Alternativ kann die Versuchsflüssigkeit über den zweiten Auslass durch eine Abflussleitung (z.B. eine Abwasserleitung) abgeleitet werden, insbesondere wenn sie beim Durchströmen der Versuchsanordnung mit einer Markierungsflüssigkeit (z.B. Tinte) versehen wird, die nicht im Vorratsbehälter angereichert werden soll. Als Versuchsflüssigkeit kann insbesondere Wasser verwendet werden, z.B. Trinkwasser aus dem Leitungsnetz.

Gemäß einer Ausführungsart der Vorrichtung läuft am inneren Rand der Öffnung eine bezüglich der Stellfläche nach unten versetzte Innenstufe zur Auflage des äußeren Randes der Basisplatte um. Hierdurch wird eine genaue Positionierung des Versuchsmoduls auf der Vorrichtung erleichtert.

Gemäß einer weiteren Ausführungsart ist im Innenraum des Vorratsbehälters mindestens eine Lage aus einem offenporigen Schaum angeordnet. Hierdurch wird ein Schwappen des Tankinhalts und Rückspritzen aus dem ersten Auslass abgegebener Flüssigkeit verhindert und eine schnelle und genaue Versuchsdurchführung begünstigt.

Gemäß einer weiteren Ausführungsart ist im Innenraum eine erste Lage aus einem ersten offenporigen Schaum und darauf eine zweite Lage aus einem zweiten offenporigen Schaum angeordnet, wobei die zweite Lage dünner als die erste Lage und der zweite offenporige Schaum feinporiger als der erste offenporige Schaum ist. Hierdurch wird ein Schwappen der Versuchsflüssigkeit im Vorratsbehälter und ein Rückspritzen von Versuchsflüssigkeit besonders wirksam verhindert.

Gemäß einer weiteren Ausführungsart ist in einer ersten Leitung zwischen der ersten Pumpe und dem ersten Anschluss ein Volumenstrom-Messaufnehmer, vorzugsweise ein magnetisch induktiver Messaufnehmer, zum Messen des Volumenstroms der Versuchsflüssigkeit angeordnet. Hierdurch kann der Volumenstrom schnell und genau gemessen werden. Gemäß einer anderen Ausführungsart wird der Volumenstrom über die Drehzahl der Pumpe ermittelt. Dieses ist insbesondere in Kenntnis der Pumpenkennlinie und der Kennlinie der Versuchsanordnung des verwendeten Versuchsmoduls möglich.

Gemäß einer weiteren Ausführungsart ist an einer Gehäusewand des Tischgehäuses ein erster Referenzdruckanschluss und mindestens ein erster Druckanschluss von außen zugänglich angeordnet und im Tischgehäuse mindestens ein Druckaufnehmer für die Messung eines Differenzdruckes angeordnet, der mit dem ersten Referenzdruckanschluss und dem ersten Druckanschluss verbunden ist, so dass der erste Referenzdruckanschluss über einen zweiten Schlauch mit einem zweiten Referenzdruckanschluss einer Versuchsanordnung und der erste Druckanschluss über einen dritten Schlauch mit einem zweiten Druckanschluss der Versuchsanordnung verbindbar ist, wenn das Versuchsmodul auf die Stellfläche aufgesetzt ist. Dies ermöglicht die Durchführung von strömungsmechanischen Versuchen, bei denen Druckmessungen erforderlich sind. Die gesonderte Ausrüstung der Versuchsmodule mit Druckmesseinrichtungen kann entfallen. Die Vorrichtung kann mit einem besonders genauen Druckaufnehmer ausgestattet werden und die Anzeige der gemessenen Drucke kann in besonders gut wahrnehmbarer Weise auf der Vorrichtung erfolgen.

Gemäß einer weiteren Ausführungsart ist der Druckaufnehmer über Magnetventile mit verschiedenen ersten Druckanschlüssen verbunden. Hierdurch ist es möglich, Drücke an verschiedenen Stellen einer Versuchsanordnung auf einem Versuchsmodul zu messen.

Gemäß einer weiteren Ausführungsart umfasst die Vorrichtung mehrere parallelgeschaltete Druckaufnehmer mit unterschiedlichen Messbereichen. Hierdurch können Drucke in einem insgesamt sehr großen Messbereich gemessen werden.

Gemäß einer weiteren Ausführungsart ist im Tischgehäuse ein Temperaturaufnehmer angeordnet, der in die erste Leitung zwischen der Pumpe und dem ersten Anschluss oder in den Innenraum des Vorratsbehälters eingreift, um die Temperatur der Versuchsflüssigkeit zu messen. Hierdurch kann der Einfluss der Temperatur auf strömungsmechanische Versuche untersucht werden.

Gemäß einer weiteren Ausführungsart ist im Tischgehäuse eine Heizeinrichtung und/oder eine Kühleinrichtung angeordnet, die in einer Zirkulationsleitung mit einer darin angeordneten zweiten Pumpe und/oder in den Vorratsbehälter integriert ist, um die Versuchsflüssigkeit zu heizen und/oder zu kühlen. Hierdurch wird die Einhaltung vorgegebener Versuchstemperaturen ermöglicht.

Gemäß einer weiteren Ausführungsart ist die Heizeinrichtung eine elektrische Widerstandsheizung und/oder ist die Kühleinrichtung ein Wärmetauscher, der mit an einer Gehäusewand angeordneten Kühlmittelanschlüssen verbunden ist, der von außen zugänglich ist, um diesen mittels eines vierten und eines fünften Schlauches mit einem Kaltwassersatz oder einer anderen Kühlmittelquelle zu verbinden. Als Kühlmittel kann gegebenenfalls Leitungswasser verwendet werden.

Eine weitere Ausführungsart umfasst eine Einrichtung zum Entlüften der Einrichtungen zum Messen des Differenzdruckes, die die Zirkulationsleitung und die darin angeordnete zweite Pumpe sowie Magnetventile umfasst, mittels derer die Versuchsflüssigkeit wahlweise durch eine zweite Leitung zwischen dem Druckaufnehmer und dem ersten Referenzdruckanschluss und einem daran angeschlossenen zweiten Schlauch sowie die damit über den zweiten Referenzdruckanschluss verbundene Versuchsanordnung eines auf die Stellfläche aufgesetzten Versuchsmoduls und von dort in den Versuchsbehälter zurückgepumpt werden kann oder durch eine dritte Leitung zwischen dem Druckaufnehmer und dem ersten Druckanschluss und einen daran angeschlossenen dritten Schlauch sowie die damit über den zweiten Druckanschluss verbundene Versuchsanordnung in den Vorratsbehälter zurückgepumpt werden kann. Durch Schalten der Magnetventile können sämtliche Leitungen des Druckmesssystems entlüftet werden. Die Entlüftung kann gegebenenfalls automatisch erfolgen. Hierdurch wird eine schnelle und genaue Durchführung der Versuche begünstigt.

Gemäß einer weiteren Ausführungsart ist die erste Pumpe eine Kreiselpumpe und/oder ist die erste Pumpe eine Tauchpumpe und/oder ist die zweite Pumpe eine Kreiselpumpe und/oder ist die zweite Pumpe eine Tauchpumpe. Die Verwendung von Kreiselpumpen ist wegen der einfachen, raumsparenden und robusten Bauart besonders vorteilhaft.

Gemäß einer weiteren Ausführungsart umfasst die Vorrichtung einen Computer und ein damit verbundenes, in einer Wand des Tischgehäuses angeordnetes, von außen zugängliches Touchpanel (auch "Touchscreen" genannt), wobei der Computer ausgebildet ist, Informationen über die Vorrichtung und/oder das Versuchsmodul und/oder die Lerninhalte und/oder die Versuchseinrichtung und/oder die Versuchsdurchführung und/oder Messergebnisse und/oder Auswertungen von Messergebnissen auf dem Touchpanel anzuzeigen und/oder in Abhängigkeit von Eingaben über das Touchpanel das Entlüften der Einrichtungen zum Messen des Differenzdruckes und/oder die Durchführung von Versuchen und/oder die Erfassung von Messergebnissen und/oder die Auswertung von Messergebnissen zu steuern. Hierdurch wird eine schnelle und genaue Versuchsdurchführung und eine besonders instruktive Vermittlung der Lerninhalte begünstigt.

Gemäß einer weiteren Ausführungsart ist der Computer internetfähig und/oder umfasst einen WLAN-Access Point, der mit dem Computer vernetzt ist. Hierdurch wird eine Verbreitung der zuvor genannten Informationen und Steuerung der Vorrichtung über das Internet ermöglicht.

Gemäß einer weiteren Ausführungsart umfasst die Vorrichtung ein mit dem Computer verbundenes Lesegerät für einen RFID, das ausgebildet ist, eine auf einem RFID eines Versuchsmoduls gespeicherte Kennung auszulesen, wenn dieses auf die Stellfläche aufgesetzt ist, wobei der Computer ausgebildet ist, in Abhängigkeit von der vom RFID ausgelesenen Kennung den Programmablauf zu steuern. Hierdurch wird eine besonders schnelle und genaue Versuchsdurchführung begünstigt.

Gemäß einer weiteren Ausführungsart weist das Tischgehäuse an einer Gehäusewand mindestens einen ersten Messsignalanschluss auf, der mit dem Computer verbunden, von außen zugänglich und über ein erstes elektrisches Kabel über einen zweiten elektrischen Messsignalanschluss mit einem elektrischen Messaufnehmer auf einem Versuchsmodul verbindbar ist, wenn dieses auf die Stellfläche aufgesetzt ist. Hierdurch wird die Erfassung von Signalen elektrischer Messwertaufnehmer auf den Versuchsmodulen ermöglicht. Dies begünstigt die Durchführung weiterer Versuche und eine schnelle und genaue Versuchsdurchführung.

Die Vorrichtung umfasst ein Tischgehäuse, wobei die Bauteile der Vorrichtung insgesamt oder im Wesentlichen in und/oder am Tischgehäuse angeordnet sind. Bei dem Tischgehäuse handelt es sich um ein Gehäuse, das auf einen Tisch aufsetzbar ist, insbesondere auf ein Pult in einem Unterrichtsraum oder in einem Hörsaal. Die Vorrichtung kann besonders kompakt in einem tragbaren Gehäuse ausgeführt werden. Gemäß einer Ausführungsart hat das Tischgehäuse eine Grundfläche von maixmal 0,75 Meter x 1 Meter und eine Höhe von maximal 0,9 Meter. Das Tischgehäuse hat vorzugsweise eine Grundfläche von 0,575 Meter x 0,73 Meter und eine Höhe von 0,685 Meter. Gemäß einer Ausführungsart hat die Vorrichtung ein Gewicht von maximal 50 kg, vorzugsweise von maximal 40 kg. Infolgedessen hat die Vorrichtung einen geringen Platzbedarf und kann von einer oder mehreren Personen getragen werden.

Gemäß einer weiteren Ausführungsart weist das Tischgehäuse ein Unterteil mit der Stellfläche an einer Oberseite und einen am hinteren Rand des Unterteiles nach oben vorstehenden Schaltschrank auf, wobei im Unterteil der Vorratsbehälter, die erste Pumpe und gegebenenfalls die zweite Pumpe und im Schaltschrank die Steuerungseinrichtung und gegebenenfalls die Messaufnehmer und gegebenenfalls der Computer und gegebenenfalls das Touchpanel angeordnet sind. Hierdurch kann eine vorteilhafte Aufteilung und Trennung hydraulischer und elektrischer Bauteile erreicht werden.

Ferner ist die Anordnung des Touchpanels und gegebenenfalls von Schalteinrichtungen im Schaltschrank für die Bedienung und das Erfassen von Informationen besonders vorteilhaft.

Gemäß einer weiteren Ausführungsart ist der erste Anschluss und gegebenenfalls der erste Referenzdruckanschluss und der erste Druckanschluss und gegebenenfalls ein erster elektrischer Messsignalanschluss für einen externen elektrischen Messaufnehmer und gegebenenfalls erste elektrische Stromanschlüsse für einen externen Verbraucher und gegebenenfalls das Touchpanel in einer vorderen Gehäusewand des Schaltschrankes angeordnet, die der Stellfläche zugewandt ist. Dies ist vorteilhaft für die Trennung hydraulischer und elektrischer Bauteile und für die Bedienung der Vorrichtung.

Gemäß einer weiteren Ausführungsart umfasst das Tischgehäuse Griffe zum Tragen des Tischgehäuses. Dies ist vorteilhaft für den Aufbau und den Abbau der Versuchsgeräte.

Gemäß einer Ausführungsart des Versuchsmoduls ist die Versuchsanordnung pumpenlos. Unter einer pumpenlosen Versuchsanordnung wird eine Versuchsanordnung verstanden, die keine eigene Pumpe aufweist, um die Versuchsflüssigkeit durch die Versuchsanordnung hindurchzupumpen. Bei dieser Ausführungsart wird die Versuchsflüssigkeit ausschließlich mittels der ersten Pumpe der Vorrichtung gepumpt.

Gemäß einer Ausführungsart umfasst das Versuchsmodul einen zweiten Referenzdruckanschluss und mindestens einen zweiten Druckanschluss, die mit der Versuchsanordnung verbunden sind, und/oder mindestens eine zweiten Messsignalanschluss, der mit einem elektrischen Messaufnehmer im Versuchsaufbau verbunden ist, und/oder zweite elektrische Stromanschlüsse für die Verbindung mit einer elektrischen Spannungsquelle, die mit einem elektrischen Verbraucher auf der Basisplatte verbunden sind. Der Verbraucher ist beispielsweise eine Elektrodenanordnung zum Erzeugen von Gasbläschen und/oder eine Leuchte zum Ausleuchten eines Strömungsfeldes.

Gemäß einer Ausführungsart umfasst das Versuchsmodul einen RFID, auf dem eine auslesbare Kennung mit einer Identifikation des Versuchsmoduls gespeichert ist.

Gemäß einer Ausführungsart umfasst das Versuchsmodul Griffe zum Tragen des Versuchsmoduls. Gemäß einer weiteren Ausführungsart stehen die Griffe zum Tragen von der Basisplatte nach oben vor. Dies ist vorteilhaft für den Aufbau und den Abbau der Versuchsgeräte.

Das Versuchsmodul für die Durchführung von strömungsmechanischen Versuchen umfasst eine der nachfolgenden Versuchsanordnungen:

- ein auf der Basisplatte gehaltenes, Rohr aus einem durchsichtigen Material, eine Einrichtung zum Einspeisen einer Markierungsflüssigkeit zwischen einem ersten Rohrende des Rohrs und dem zweiten Anschluss, einen oberhalb der Einrichtung zum Einspeisen gehaltenen Behälter für Markierungsflüssigkeit, ein in einer Einspeiseleitung zwischen dem Behälter und der Einrichtung zum Einspeisen angeordnetes Dosierventil, einen mit einem zweiten Rohrende des Rohrs verbundenen Rohrkrümmer aus einem durchsichtigen Material mit einem zweiten Auslass am anderen Ende zum Verbinden mit einer Abflussleitung oder zum Verbinden mit einer Auslassleitung zu einem ersten Auslass in einer Bohrung der Bodenplatte;

- mindestens ein auf der Basisplatte gehaltenes, horizontales Rohr, das an einem ersten Rohrende über eine Düse oder einen scharfkantigen Einlauf mit dem zweiten Anschluss verbunden ist und dessen zweites Rohrende über einen Sammelbehälter für Versuchsflüssigkeit mit dem ersten Auslass verbunden ist, wobei in dem Sammelbehälter mittels einer Verlagerungseinrichtung eine in das Rohr eingreifende Kanüle quer zum Rohrquerschnitt verlagerbar ist und die Kanüle mit einem zweiten Druckanschluss verbunden ist;

- ein auf der Basisplatte gehaltener vertikaler Strömungskanal mit einer durchsichtigen Frontplatte, der unten mit dem zweiten Anschluss und oben über mindestens eine Auslassleitung mit dem ersten Auslass verbunden ist, in dem mindestens ein Versuchskörper angeordnet oder anordenbar ist, in dem unterhalb des Versuchskörpers eine den Querschnitt des Strömungskanals zumindest teilweise überspannende erste Elektrode und in dem eine zweite Elektrode angeordnet ist, wobei die erste Elektrode und die zweite Elektrode mit zweiten elektrischen Stromanschlüssen zum Anschluss einer elektrischen Spannungsquelle verbunden sind;

- ein auf der Basisplatte gehaltenes Rohr aus einem durchsichtigen Material, das an einem ersten Rohrende den zweiten Anschluss aufweist, daran angrenzend einen ersten Rohrabschnitt mit einem größeren Durchmesser, daran angrenzend einen konischen oder mit einer anderen Form sich verjüngenden Übergangsabschnitt und daran angrenzend einen zweiten Rohrabschnitt mit einem kleineren Durchmesser aufweist und am anderen Ende über eine Auslassleitung mit dem ersten Auslass verbunden ist, wobei in dem ersten Rohrabschnitt ein erstes Flügelrad und in dem zweiten Rohrabschnitt ein zweites Flügelrad angeordnet ist, neben dem ersten Rohrabschnitt eine erste Abtasteinrichtung zum Abtasten der Drehgeschwindigkeit des ersten Flügelrades, neben dem zweiten Rohrabschnitt eine zweite Abtasteinrichtung zum Abtasten der Drehgeschwindigkeit des zweiten Flügelrades angeordnet ist und die ersten und zweiten Abtasteinrichtungen mit zweiten Messsignalanschlüssen verbunden sind;

- ein auf den Rand des als zweite Öffnung der Basisplatte ausgebildeten ersten Auslasses aufgesetzter, oben geschlossener und durchsichtiger Auffangzylinder mit vertikaler Achse, eine mit dem zweiten Anschluss verbundene, oberhalb der ersten Öffnung im Auffangzylinder vertikal nach oben gerichtete Düse, ein vertikal oberhalb der Düse an einem Arm eines schwenkbar an einem Träger gelagerten Hebels gehaltenes Prallelement, ein einerseits an einen Widerlager und andererseits an dem anderen Arm des Hebels abgestützte Kraftmesseinrichtung, wobei der Eingang der Düse mit dem zweiten Druckanschluss verbunden ist und die Kraftmesseinrichtung mit dem zweiten Messsignalanschluss verbunden ist;

- ein auf der Basisplatte mit vertikaler Achse angeordneter, durchsichtiger Zylinder mit dem zweiten Anschluss am unteren Ende und einer darüber angeordneten Ausströmöffnung an der Seite, an der austauschbar verschiedene Öffnungselemente befestigbar sind, ein seitlich neben dem Zylinder angeordneter, und zur Ausströmöffnung hin geöffneter, oben offener Schacht mit einer zumindest transparenten vorderen Wand, der unten zu dem als zweite Öffnung in der Basisplatte ausgebildeten ersten Auslass hin geöffnet ist, wobei der Schacht oben oberhalb der Austrittsöffnung geöffnet ist und eine auf den oberen Rand des Schachtes aufgesetzte Längenmesseinrichtung vorhanden ist, die zum Messen des Abstandes eines aus der Ausströmöffnung austretenden Versuchsflüssigkeitsstrahles vom oberen Rand des Schachtes in verschiedenen Abständen von der Austrittsöffnung positionierbar ist, wobei an dem Zylinder unten der zweite Druckanschluss und an einem Becken auf der Basisplatte der zweite Referenzdruckanschluss angeordnet ist;

- eine oberhalb der Basisplatte gehaltene horizontale Venturi-Düse aus einem transparenten Material, die an einem Ende mit dem zweiten Anschluss verbunden ist und am anderen Ende über eine Auslassleitung mit dem ersten Auslass der Basisplatte verbunden ist, wobei an verschiedenen Stellen von Düse und Diffusor der Venturi-Düse Druckmessbohrungen vorhanden sind, die mit von der Außenseite der Venturi-Düse vorstehenden zweiten Druckund zweiten Referenzdruckanschlüssen verbunden sind, wobei von dem anderen Ende durch eine Abdichtung hindurch eine Drucklanze in die VenturiDüse hinein und mit der Eintrittsöffnung an verschiedenen axialen Positionen in der Venturi-Düse positionierbar ist und die Drucklanze am anderen Ende mit einem zweiten Druckanschluss verbunden ist;

- mehrere horizontale, gleich lange Rohre mit verschiedenen Einbauten, die parallel nebeneinander auf der Basisplatte gehalten sind, die vorzugsweise ausgewählt sind aus einem Rohr mit großem Innendurchmesser und eingebauter Düse, einem Rohr mit großem Innendurchmesser und eingebauter Blende, einem Rohr mit kleinem Innendurchmesser und eingebauter Düse, einem Rohr mit kleinem Innendurchmesser, S-Krümmung und eingebauter Düse, einem Rohr mit kleinem Innendurchmesser, scharfkantiger S-Krümmung und eingebauter Düse, einem Rohr mit kleinem Innendurchmesser, Doppel-S-Krümmung und eingebauter Düse und einem Rohr mit kleinem Innendurchmesser, eingebautem Ventil und eingebauter Düse, wobei der kleine Innendurchmesser ein kleinerer Innendurchmesser als der große Innendurchmesser ist, wobei die Rohre an ersten Rohrenden mit einem Verteilerblock verbunden sind, der den zweiten Anschluss und einen zweiten Druckanschluss aufweist, und die Rohre an zweiten Rohrenden über Handhähne mit einem Abflussblock verbunden sind, der einen zweiten Referenzdruckanschluss aufweist und über eine Auslassleitung mit dem ersten Auslass in der Basisplatte verbunden ist;

- auf der Basisplatte nebeneinander gehaltene horizontale Rohre und Rohrbündel mit unterschiedlichen Innendurchmessern, die an den ersten Rohrenden jeweils den zweiten Anschluss aufweisen und deren zweite Rohrenden jeweils oberhalb einer quer zu den Rohren erstreckten, den Auslass bildenden zweiten Öffnung in der Basisplatte münden, die an dem von den Rohren und Rohrbündeln entfernten Rand und an zu den Rohren und Rohrbündeln parallelen Rändern durch von der Basisplatte hochstehende Spritzschutzwände eingefasst ist, wobei die Rohre und Rohrbündel jeweils in einem Abstand von dem zweiten Anschluss einen zweiten Druckanschluss und ein erstes Entlüftungsventil und in einem weiteren Abstand von dem zweiten Anschluss einen zweiten Referenzdruckanschluss und ein zweites Entlüftungsventil aufweisen und gegebenenfalls ein Rohrbündel in einem weniger weit von dem zweiten Anschluss entfernten Abstand von dem zweiten Anschluss einen zweiten Druckanschluss und ein drittes Entlüftungsventil aufweist;

- auf der Basisplatte nebeneinander gehaltene horizontale Rohre umfassend ein hydraulisch glattes Rohr, ein hydraulisch raues Rohr und ein rechteckiges Rohr, die an ersten Rohrenden jeweils einen zweiten Anschluss, in einem Abstand davon einen zweiten Druckanschluss und in einem weiteren Abstand davon einen zweiten Referenzdruckanschluss aufweisen, und ein Rohr mit mehr als drei Druckmessbohrungen entlang einer Einlaufstrecke, von denen die beiden äußeren mit einem zweiten Referenzdruckanschluss und die anderen jeweils mit einem zweiten Druckanschluss verbunden sind, wobei sämtliche Rohre am ersten Rohrende einen zweiten Anschluss aufweisen und nur das Rohr mit den mehr als drei Druckmessbohrungen auch am zweiten Rohrende einen zweiten Anschluss aufweist und die zweiten Rohrenden sämtlicher Rohre über einer quer zu den Rohren erstreckten, den ersten Auslass bildenden zweiten Öffnung in der Basisplatte münden, die an dem von den Rohren entfernten Rand und zu den Rohren parallelen Seitenrändern durch von der Basisplatte hochstehende Spritzschutzwände eingefasst ist;

- ein horizontaler Strömungskanal auf der Basisplatte mit zumindest einer vorderen Wand aus einem transparenten Material, einem zweiten Anschluss an dem einen Ende des Strömungskanals und einer Verbindung zu dem ersten Auslass an dem anderen Ende des Strömungskanals, mehreren in den Strömungskanal einsetzbaren und darin mittels Magneten fixierbaren Einbauten zur Demonstration von Energiehöhen und Verlusten sowie der Ermittlung von Durchflüssen bei der Durchströmung des Strömungskanals.

Ferner umfasst die Erfindung ein System zur Durchführung von strömungsmechanischen Versuchen umfassend eine Vorrichtung gemäß einem der Ansprüche 1 bis 20 und mindestens ein Versuchsmodul für die Durchführung von strömungsmechanischen Versuchen umfassend

- eine Basisplatte zum Aufsetzen auf eine Stellfläche und Abdecken einer darin ausgebildeten ersten Öffnung zu einem Vorratsbehälter einer Vorrichtung gemäß Anspruch 1,
- eine auf der Basisplatte angeordnete Versuchsanordnung für strömungsmechanische Versuche,
- einen zweiten Anschluss für die Einspeisung von Versuchsflüssigkeit mittels eines ersten Schlauches in die Versuchsanordnung,
- einen ersten Auslass für Versuchsflüssigkeit an der Unterseite der Basisplatte, der über eine Einrichtung zum Leiten von Versuchsflüssigkeit mit der Versuchsanordnung verbunden ist,
- und/oder einen zweiten Auslass für Versuchsflüssigkeit oberhalb der Basisplatte zum Verbinden mit einer Abflussleitung.

Die Vorrichtung und das Versuchsmodul werden zusammenfassend auch "Versuchsgeräte" genannt.
Gemäß einer weiteren Ausführungsart umfasst das System ein fahrbares Regal mit mehreren Regalböden zum Lagern der Vorrichtung und von mehreren Versuchsmodulen.
Die Erfindung wird nachfolgend anhand der anliegenden Zeichnungen von Ausführungsbeispielen näher erläutert. In den Zeichnungen zeigen:

Fig. 1      eine Vorrichtung zur Durchführung von strömungsmechanischen Versuchen in einer Perspektivansicht schräg von vorn und von der Seite;

Fig. 2      dieselbe Vorrichtung bei abgenommener Rückwand in einer Rückansicht;

Fig. 3      System der Vorrichtung zum Messen von Drucken in den Versuchsanordnungen und zum Heizen/Kühlen der Versuchsflüssigkeit in einem Hydraulikplan;

Fig. 4      ein erstes Versuchsmodul für die Visualisierung der Rohrströmung in einer Perspektivansicht schräg von vorn und von der Seite;

Fig. 5      ein zweites Versuchsmodul für die Messung des Strömungsprofils in einer Perspektivansicht schräg von vorn und von der Seite;

Fig. 6      dasselbe Versuchsmodul in einer Perspektivansicht schräg von hinten und von der Seite,

Fig. 7      ein drittes Versuchsmodul zur Visualisierung von Stromlinien in einer Perspektivansicht schräg von vorn und von der Seite;

Fig. 8      dasselbe Versuchsmodul in einer Teilansicht von hinten;

Fig. 9      ein viertes Versuchsmodul zur Untersuchung der Kontinuitätsgleichung in einer Perspektivansicht schräg von vorn und von der Seite;

Fig. 10     ein fünftes Versuchsmodul zur Messung von Strahlkräften in einer Perspektivansicht schräg von vorn und von der Seite;

Fig. 11     dasselbe Versuchsmodul bei abgenommenem Auffangzylinder in einer Perspektivansicht schräg von hinten und von der Seite;

Fig. 12     ein sechstes Versuchsmodul zur Untersuchung des freien Ausflusses in einer Perspektivansicht schräg von vorn und von der Seite;

Fig. 13     dasselbe Versuchsmodul in einer Perspektivansicht schräg von hinten und von der Seite;

Fig. 14     ein siebtes Versuchsmodul zur Untersuchung des Gesetzes von Bernoulli in einer Perspektivansicht schräg von vorn und von der Seite;

Fig. 15     ein achtes Versuchsmodul zur Untersuchung der Verluste in Rohrleitungen in einer Perspektivansicht schräg von vorn und von der Seite;

Fig. 16     ein neuntes Versuchsmodul zur Untersuchung von Grundlagen der Rohrreibung in einer Perspektivansicht schräg von vorn und von der Seite;

Fig. 17     ein zehntes Versuchsmodul zu Untersuchung des Druckverlaufs entlang der Einlaufstrecke in einer Perspektivansicht schräg von vorn und von der Seite;

Fig. 18     ein elftes Versuchsmodul zur Untersuchung der Strömung in einem offenen Gerinne in einer Perspektivansicht schräg von vorn und von der Seite;

Fig. 19     dasselbe Versuchsmodul in einer Teilansicht von der Rückseite,

Fig. 20     ein fahrbares Regal in einer Perspektivansicht schräg von vorn und von der Seite,

Fig. 21     das System von Fig. 3 bei der Druckmessung;

Fig. 22     dasselbe System beim Entlüften der Druckanschlüsse;

Fig. 23     dasselbe System beim Entlüften der Druckaufnehmer;

Fig. 24     dasselbe System beim Heizen/Kühlen der Versuchsflüssigkeit.

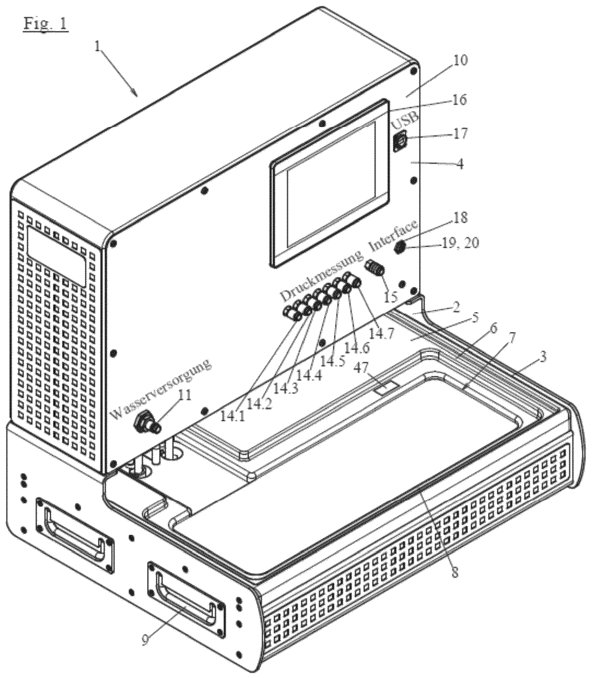

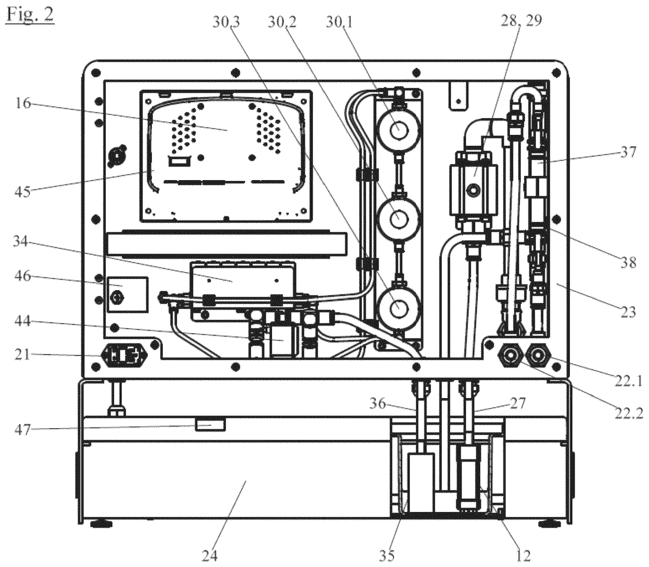

Gemäß Fig. 1 und 2 weist die Vorrichtung 1 ein Tischgehäuse 2 mit einem flachen, im Wesentlichen quaderförmigen Unterteil 3 und einen am hinteren Rand des Unterteiles 3 hochstehenden flachen, quaderförmigen Schaltschrank 4 auf. Insgesamt ist das Tischgehäuse 2 als Pultgehäuse ausgebildet.

Das Unterteil 3 hat eine horizontale obere Gehäusewand 5 mit einer Stellfläche 6 und einer darin ausgebildeten, im Wesentlichen rechteckigen ersten Öffnung 7. Am inneren Rand der ersten Öffnung 7 läuft eine bezüglich der Stellfläche 6 nach unten versetzte Innenstufe 8 um.

An den beiden Seiten des Unterteils 3 sind schwenkbare Griffe 9 zum Tragen des Tischgehäuses 2 angeordnet.

Auf einer vorderen Gehäusewand 10 des Schaltschrankes 4, die sich auf der Seite der Stellfläche 6 des Unterteiles 3 befindet, ist ein erster Anschluss 11 angeordnet, der mit dem Ausgang einer ersten Pumpe 12 verbunden ist. Der erste Anschluss 11 ist als Schlauchkupplung für den Anschluss eines Schlauches ausgebildet.

Auf der in Fig. 1 rechten Seite der vorderen Gehäusewand 10 des Schaltschrankes 4 sind insgesamt sieben erste Druckanschlüsse 14.1 bis 14.7 und rechts daneben ein erster Referenzdruckanschluss 15 angeordnet. Die Druck- und Referenzdruckanschlüsse 14.1 bis 14.7 und 15 sind ebenfalls als Schlauchkupplungen ausgebildet.

Darüber ist ein Touchpanel 16 in die vordere Gehäusewand 10 eingelassen.

Neben dem Touchpanel 16 ist in der vorderen Gehäusewand 10 eine USB-Buchse 17 angeordnet, in die ein USB-Stick zur Speicherung von Messergebnissen einsetzbar ist.

Die Vorrichtung 1 weist an der vorderen Gehäusewand 10 neben den ersten Druck- und Referenzdru-

ckanschlüssen 14.1 bis 14.7, 15 eine mehrpolige Buchse 18 für den Anschluss elektrischer Messaufnehmer und/oder elektrischer Verbraucher auf. Die Buchse 18 umfasst erste Messsignalanschlüsse 19 und erster elektrische Stromanschlüsse 20.

Gemäß Fig. 2 sind auf der Rückseite des Schaltschrankes 4 ein Ein-/Ausschalter 21 und Kühlmittelanschlüsse 22.1, 22.2 z.B. für Kühlwasser angeordnet, die ebenfalls als Schlauchkupplungen ausgebildet sind. Der Ein-/Aus-Schalter 21 und die Kühlmittelanschlüsse 22.1, 22.2 sind in einer Rahmenleiste 23 des Schaltschrankes 4 gehalten, an der eine hintere Gehäusewand fixierbar ist.

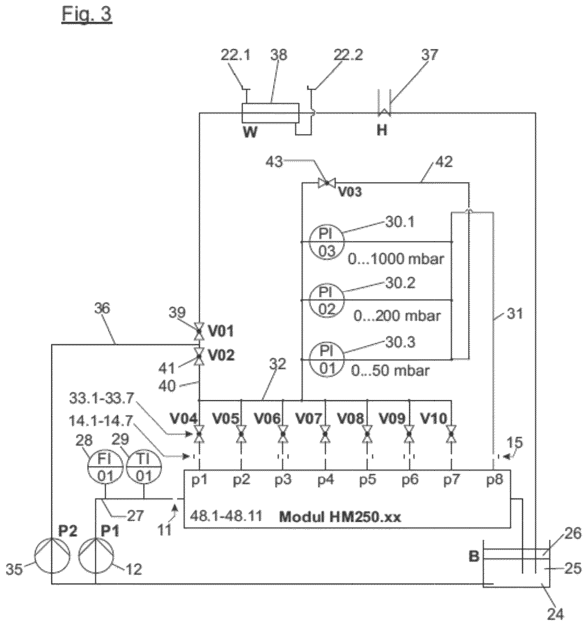

Gemäß Fig. 2 und 3 ist im Unterteil 3 ein wannenförmiger Vorratsbehälter 24 angeordnet, der beispielsweise als tiefgezogene Kunststoffform ausgebildet ist. Der Vorratsbehälter 24 hat beispielsweise ein Volumen von 10 l. Der Vorratsbehälter 24 ist im Wesentlichen durch eine erste Lage aus einem ersten offenporigen Schaum 25 gefüllt. Darüber befindet sich eine dünne zweite Lage aus einem feinporigen Schaum 26.

In dem Vorratsbehälter 24 ist in entsprechenden Löchern der Lagen aus Schaum 25, 26 die erste Pumpe 12 angeordnet, die als Tauchpumpe ausgebildet ist. Die erste Pumpe 12 ist ausgangsseitig über eine erste Leitung 27 mit einem im Schaltschrank 4 angeordneter Volumenstrom-Messaufnehmer 28, der baulich mit einem Temperatur-Messaufnehmer 29 zusammengefasst ist, mit dem ersten Anschluss 11 verbunden.

Im Schaltschrank 4 sind parallel geschaltete Druckaufnehmer 30.1, 30.2, 30.3 angeordnet. Die Druckaufnehmer 30.1, 30.2, 30.3 sind einerseits über eine zweite Leitung 31 mit dem ersten Referenzdruckanschluss 15 verbunden. Andererseits sind die Druckaufnehmer 30.1, 30.2, 30.3 über eine dritte Leitung 32, in der sich Magnetventile 33.1 bis 33.7 befinden, die baulich in einem ersten Ventilblock 34 zusammengefasst sind, mit den ersten Druckanschlüssen 14.1 bis 14.7 verbunden.

In dem Vorratsbehälter 24 befindet sich in entsprechenden Löchern der Lagen aus Schäumen 25, 26 eine zweite Pumpe 35, die ebenfalls als Tauchpumpe ausgebildet ist. Die zweite Pumpe 35 ist ausgangsseitig ist über eine Zirkulationsleitung 36, in der sich eine Heizeinrichtung 37 in Form einer elektrischen Widerstandsheizung oder eines Wärmetauschers und eine Kühleinrichtung 38 in Form eines Rohrkühlers befindet, mit dem Vorratsbehälter 24 verbunden. Die Kühleinrichtung 38 ist mit den beiden Kühlmittelanschlüssen 22.1, 22.2 verbunden.

Die erste Pumpe 12 und die zweite Pumpe 35 sind jeweils als Zentrifugalpumpen ausgebildet und umfassen jeweils einen Elektromotor zum Antreiben der Zentrifugalpumpe.

In der Zirkulationsleitung 36 ist zwischen der zweiten Pumpe 35 und der Heizeinrichtung 37 ein erstes Schaltventil 39 angeordnet. Zwischen dem ersten Schaltventil 39 und der zweiten Pumpe 35 ist die Zirkulationsleitung 36 über eine erste Verbindungsleitung 40 zwischen den Druckaufnehmern 30.1, 30.2, 30.3 und den Magnetventilen 33.1 bis 33.7 mit der dritten Leitung 32 verbunden. In der ersten Verbindungsleitung 40 ist ein zweites Schaltventil 41 angeordnet. Die Eingangs- und Ausgangsseiten der Druckaufnehmer 30.1, 30.2, 30.3 sind über eine zweite Verbindungsleitung 42 miteinander verbunden, in der ein drittes Schaltventil 43 angeordnet ist. Die ersten, zweiten und dritten Schaltventile 39, 40, 43 sind baulich in einem zweiten Ventilblock 44 zusammengefasst.

In das Touchpanel 16 ist ein Computer 45 integriert. Der Computer 45 ist mit den ersten und zweiten Pumpen 12, 35, den Druckaufnehmern 30.1, 30.2, 30.3, den Magnetventilen 33.1 bis 33.7, den Schaltventilen 39, 41, 43, der elektrischen Heizeinrichtung 37, dem Volumenstrom-Messaufnehmer 28, dem Temperatur-Messaufnehmer 29 und der mehrpoligen Buchse 18 verbunden.

Der Computer 45 ist internetfähig und verfügt über einen WLAN-Access Point.

Der Computer 45 ist zugleich eine elektrische Steuerungseinrichtung für die erste Pumpe 12 und die zweite Pumpe 35. Im Schaltschrank 4 befindet sich noch ein Netzteil 46.

Ferner umfasst die Vorrichtung 1 ein Lesegerät 47 für einen RFID, das unterhalb der Stellfläche 6 angeordnet und mit dem Computer 45 verbunden ist.

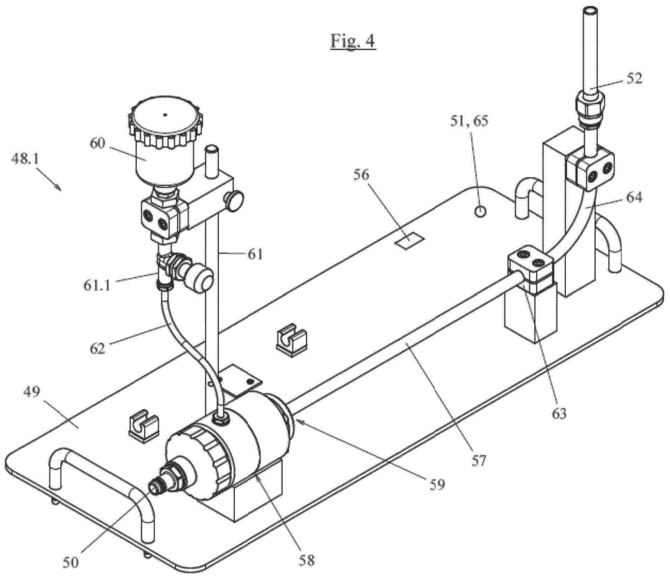

Gemäß Fig. 4 bis 19 weisen die Versuchsmodule 48 jeweils eine Basisplatte 49 mit identischen Abmessungen auf, die passgenau auf die Innenstufe 8 des Grundgerätes 1 aufsetzbar ist. Ferner umfasst jedes Versuchsmodul 48 einen zweiten Anschluss 50 zum Einspeisen von Versuchsflüssigkeit und einen ersten Auslass 51 für Versuchsflüssigkeit an der Unterseite der Basisplatte 49 und/oder einen zweiten Auslass 52 für Versuchsflüssigkeit oberhalb der Basisplatte 49. Zwischen dem zweiten Anschluss 50 und dem ersten oder zweiten Auslass 51, 52 befindet sich eine Versuchsanordnung.

Zweite Druck- und Referenzdruckanschlüsse 53, 54 und zweite Messsignalanschlüsse 55 weiterer modulspezifischer Messtechnik sind gegebenenfalls in Abhängigkeit von den mit dem jeweiligen Versuchsmodul 48 durchzuführenden Untersuchungen vorhanden. In die Basisplatte 49 ist ein RFID 56 integriert, in dem eine auslesbare Kennung mit einer Identifikation des jeweiligen Versuchsmoduls 48 gespeichert ist.

Gemäß Fig. 4 umfasst das erste Versuchsmodul 48.1 ein auf der Basisplatte 49 gehaltenes horizontales Rohr 57 aus einem durchsichtigen Material. Ferner ist eine Einrichtung zum Einspeisen 58 einer Markierungsflüssigkeit in die Versuchsflüssigkeit zwischen einem ersten Rohrende 59 des Rohrs 57 und einem zweiten Anschluss 50 in Form einer Schlauchkupplung zum Verbinden mit dem ersten Anschluss 11 vorhanden. Ein Behälter 60 für Markierungsflüssigkeit ist an einer vertikal von der Basisplatte 49 hochstehenden Stange 61 höhenverstellbar gehalten. Eine Öffnung am unteren Ende des Behälters 60 ist über ein Dosierventil 61.1 und eine Einspeiseleitung 62 mit der Einrichtung zum Einspeisen 58 verbunden. Ein zweites Rohrende 63 des Rohrs 57 ist über einen Rohrkrümmer 64 aus einem durchsichtigen Material mit einem vertikal nach oben vorstehenden zweiten Auslass 52 oberhalb der Basisplatte 49 verbunden, über den das Rohr 57 mit einer Abflussleitung verbindbar ist. Bei dem ersten Versuchsmodul 48.1 weist die Basisplatte 49 einen ersten Auslass 51 in Form einer Bohrung 65 auf, in die das Ende eines mit dem Rohrkrümmer 64 verbundenen Schlauchs einsetzbar ist, um die Versuchsflüssigkeit in den Vorratsbehälter 24 zurückzuleiten.

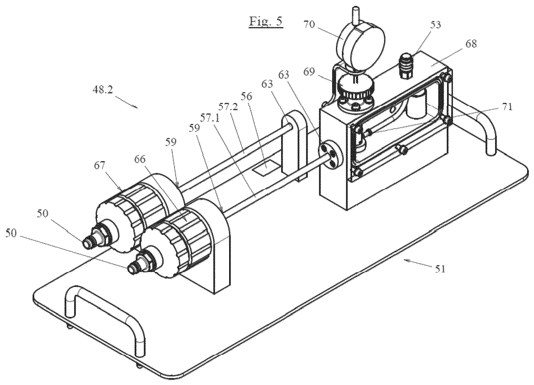

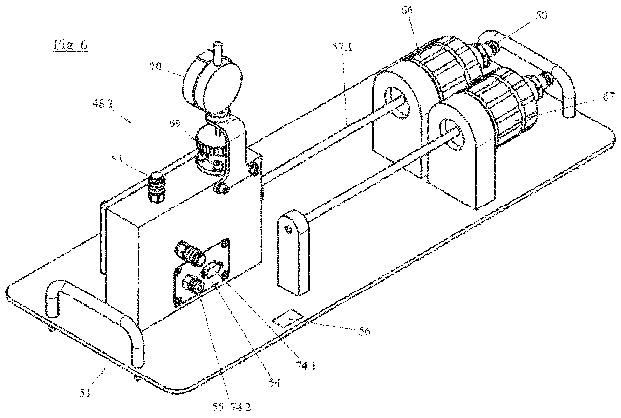

Gemäß Fig. 5 und 6 umfasst das zweite Versuchsmodul 48.2 zwei auf der Basisplatte 49 gehaltene, horizontale Rohre 57.1, 57.2, die am ersten Rohrende 59 über eine Düse 66 oder einen scharfkantigen Einlauf 67 mit dem zweiten Anschluss 50 verbunden sind. Das zweite Rohrende 63 ist über einen Sammelbehälter 68 für Versuchsflüssigkeit mit dem ersten Auslass 51 verbunden.

In dem Sammelbehälter 68 ist mittels einer Verlagerungseinrichtung 69 mit einer Messuhr 70 eine in das Rohr eingreifende Kanüle 71 quer zum Rohrquerschnitt verlagerbar. Die Kanüle 71 ist mit einem zweiten Druckanschluss 53 verbunden. Der Sammelbehälter 68 weist einen zweiten Referenzdruckanschluss 54 auf. Der zweite Druckanschluss 53 ist auf der Oberseite des Sammelbehälters 68 angeordnet und der zweite Referenzdruckanschluss 54 auf seiner Rückseite. Die Messuhr 70 ermittelt die mittels der Verlagerungseinrichtung 69 eingestellte Position der Kanüle 71 im Rohrquerschnitt.

Auf der Rückseite des Sammelbehälters 68 ist eine mehreckige Buchse 74.1 für den Anschluss der Messuhr 70 angeordnet. Diese ist mit einer daneben angeordneten runden Buchse 74.2 verdrahtet, die den zweiten Messsignalanschluss 55 bildet, an dem die Messsignale der Messuhr für die Position der Kanüle 71 bereitgestellt werden.

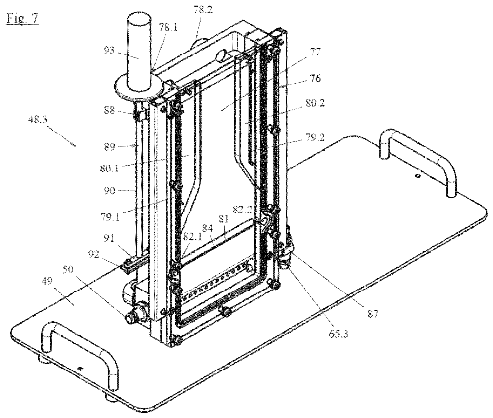

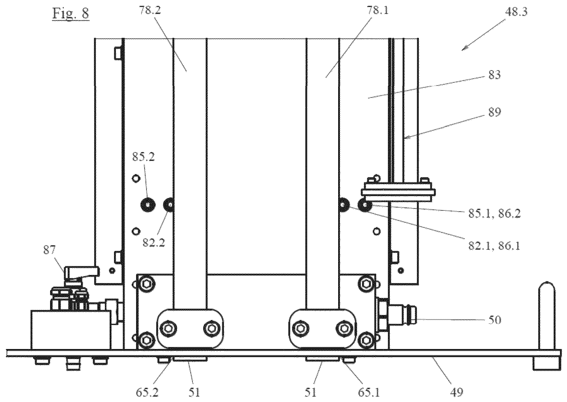

Gemäß Fig. 7 und 8 weist das dritte Versuchsmodul 48.3 einen auf der Basisplatte 49 gehaltenen vertikalen Strömungskanal 76 mit einer durchsichtigen Frontplatte 77 auf. Der Strömungskanal 76 ist unten mit dem zweiten Anschluss 50 und oben über Auslassleitungen 78.1, 78.2 durch Bohrungen 65.1, 65.2 der Basisplatte 49 hindurch mit dem ersten Auslass 51 an der Unterseite der Basisplatte 49 verbunden.

Der Strömungskanal 76 hat an den seitlichen Wänden Führungsschienen 79.1, 79.2. In diese können Versuchskörper 80.1, 80.2 eingefügt werden. Unterhalb der Versuchskörper 80.1, 80.2 überspannt eine erste Elektrode 81 zumindest teilweise den Querschnitt des Strömungskanals 76. Die erste Elektrode 81 ist ein Draht, der an den beiden seitlichen Rändern des Strömungskanals an elektrisch leitfähigen Stiften 82.1, 82.2 gehalten ist, die durch eine isolierende Rückwand 83 hindurch nach außen geführt sind. Ferner umfasst der Strömungskanal 76 eine zweite Elektrode 84. Diese ist eine elektrisch leitfähige Leiste, die auf der Höhe der ersten Elektrode 81 mittels elektrisch leitfähiger Schrauben 85.1, 85.2 befestigt, die durch die Rückwand 81 hindurch nach außen geführt sind. Die Stifte 82.1, 82.2 und die Schrauben 85.1, 85.2 bilden zweite elektrische Stromanschlüsse 86.1, 86.2 zum Anschluss einer elektrischen Spannungsquelle.

Am unteren Ende des Strömungskanals 76 ist gegenüber dem zweiten Anschluss 50 ein Ablassventil 87 angeordnet, das auf eine Bohrung 65.3 der Basisplatte 49 ausgerichtet ist.

An einer Seite hat der Strömungskanal 76 einen Klemmhalter 88, an dem ein Reinigungsschieber 89 an einem Stiel 90 gehalten ist, der unten einen Reinigungskopf 91 mit einer umlaufenden Gummilippe 92 und oben einen Handgriff 93 aufweist. Mittels des Reinigungsschiebers 89 sind Bläschen von den Wänden des vertikalen Strömungskanals 76 entfernbar.

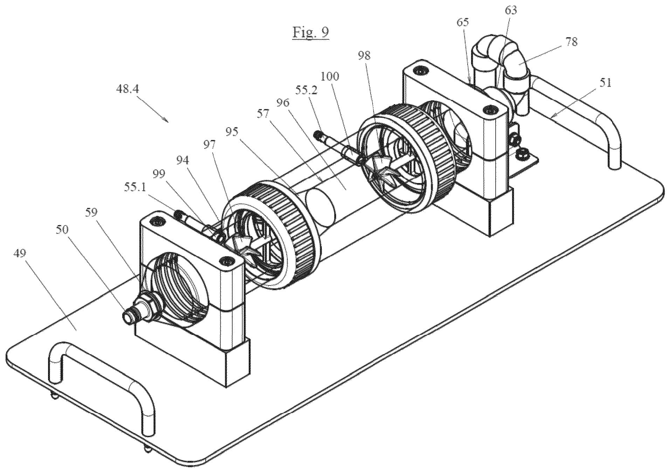

Gemäß Fig. 9 weist das vierte Versuchsmodul 48.4 ein auf der Basisplatte 49 gehaltenes Rohr 57 aus einem durchsichtigen Material auf. Das Rohr 57 hat am ersten Rohrende 59 den zweiten Anschluss 50. Von dem zweiten Anschluss 50 ausgehend erweitert sich das Rohr auf einen zylindrischen ersten Rohrabschnitt 94 mit einem größeren Querschnitt. Auf den ersten Rohrabschnitt 94 folgt ein konischer Übergangsabschnitt 95 und darauf folgt ein zylindrischer zweiter Rohrabschnitt 96 mit einem kleineren Durchmesser. Darauf folgt das zweite Rohrende 63 des Rohrs 57, das über eine Auslassleitung 78 durch eine Bohrung 65 der Basisplatte 49 hindurch mit dem ersten Auslass 51 an der Unterseite der Basisplatte 49 verbunden ist.

Im ersten Rohrabschnitt 94 ist ein erstes Flügelrad 97 und in dem zweiten Rohrabschnitt 96 ist ein zweites Flügelrad 98 angeordnet. Neben dem ersten Rohrabschnitt 94 ist eine erste Abtasteinrichtung 99 zum Abtasten der Drehgeschwindigkeit des ersten Flügelrades 97 und neben dem zweiten Rohrabschnitt 96 ist eine zweite Abtasteinrichtung 100 zum Abtasten der Drehgeschwindigkeit des zweiten Flügelrades 98 angeordnet. Die ersten und zweiten Abtasteinrichtungen 99, 100 sind mit zweiten Messsignalanschlüssen 55.1, 55.2 verbunden.

Bei einer anderen Ausführungsvariante ist das Rohr 57 in vertikaler Ausrichtung auf der Basisplatte 49 gehalten, um die Entlüftung zu erleichtern.

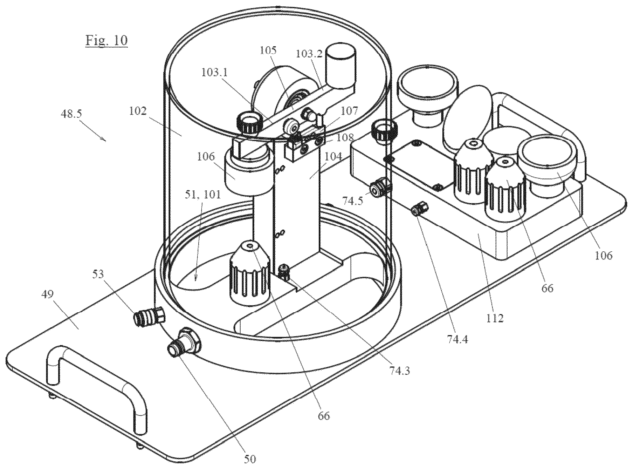

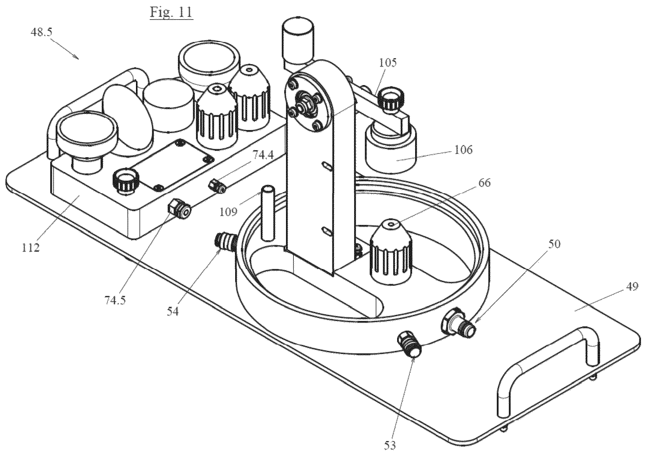

Gemäß Fig. 10 und 11 weist das fünfte Versuchsmodul 48.5 einen auf den Rand des als zweite Öffnung 101 in der Basisplatte 49 ausgebildeten ersten Auslasses 51 aufgesetzten, oben geschlossenen und durchsichtigen Auffangzylinder 102 mit vertikaler Achse auf. Mit einem zweiten Anschluss 50 ist eine austauschbare Düse 66 verbunden, die oberhalb der zweiten Öffnung 101 im Auffangzylinder 102 vertikal nach oben gerichtet ist. Oberhalb der Düse 66 ist im Auffangzylinder 102 an einem Arm 103.1 eines schwenkbar an einem Träger 104 gelagerten Hebels 105 ein austauschbares Prallelement 106 gehalten. Eine Kraftmesseinrichtung 107 ist einerseits an einem Widerlager 108 am Träger 104 und andererseits an dem anderen Arm 103.2 des Hebels 105 abgestützt. Der Eingang der Düse 66 ist mit dem zweiten Druckanschluss 53 verbunden und ein im Auffangzylinder 102 angeordnetes vertikales Röhrchen 109 mit einer Mündung auf Höhe der Mündung der Düse 66 ist mit dem zweiten Referenzdruckanschluss 54 verbunden.

Ein Steckerkabel ist von der Kraftmesseinrichtung 107 aus durch eine innere Kabeldurchführung 74.3 neben der Düse 66 und Kabeldurchführungen 74.4, 74.5 am Halter 112 hindurch zu einem Stecker geführt. Zusätzliche Düsen 66 und Prallelemente 106 sind auf einem Halter 112 auf der Basisplatte 49 bereitgestellt.

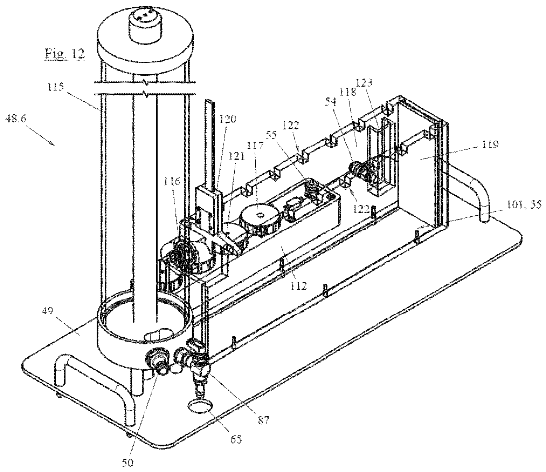

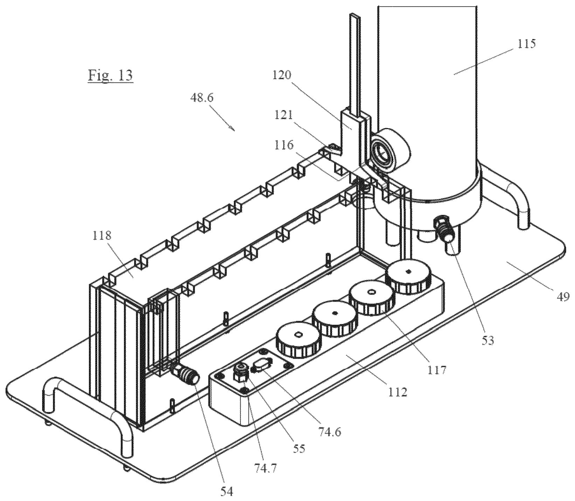

Gemäß Fig. 12 und 13 umfasst das sechste Versuchsmodul 48.6 einen auf der Basisplatte 49 mit vertikaler Achse angeordneten, durchsichtigen Zylinder 115 mit dem zweiten Anschluss 50 am unteren Ende. Darüber hat der Zylinder 115 eine Ausströmöffnung 116 an der Seite, an der austauschbar verschiedene Öffnungselemente 117 befestigbar sind. Seitlich neben dem Zylinder 115 ist ein zur Ausströmöffnung 116 hin geöffneter, oben offener Schacht 118 mit einer transparenten vorderen Wand 119 angeordnet. Der Schacht 118 ist unten zu dem als rechteckige zweite Öffnung 101 in der Basisplatte 49 ausgebildeten ersten Auslass 51 hin geöffnet. Oben ist der Schacht 118 oberhalb der Ausströmöffnung 116 geöffnet. Auf dem oberen Rand des Schachtes 118 ist eine Längenmesseinrichtung 120 mit einem Halter 121 angeordnet, der in verschiedene Nutenpaare 122 am oberen Rand des Schachtes 118 einsetzbar ist. Die Längenmesseinrichtung 120 dient dem Messen des Abstandes einer aus der Ausströmöffnung 116 austretenden Versuchsflüssigkeit vom oberen Rand des Schachtes 118 in verschiedenen Abständen von der Ausströmöffnung 116.

An der Basis des Zylinders 115 ist ein zweiter Druckanschluss 53 angeordnet. Ein zweiter Referenzdruckanschluss 54 befindet sich an einem kleinen Becken 123, das separat von dem Zylinder 115 und an der Innenseite des Schachts 118 angeordnet ist.

Auf der Basisplatte 49 befindet sich ein Halter 112, auf dem verschiedene Öffnungselemente 117 bzw. Düseneinsätze gelagert sind, die an der Ausströmöffnung 116 befestigbar sind.

Das Signal wird von der Längenmesseinrichtung 120 über ein Kabel zu einer mehreckigen Buchse 74.6 an der Oberseite des Halters 112 geführt. Diese ist innerhalb des Halters 112 mit einer runden Buchse 74.7 verkabelt, die zugleich der zweite Messsignalanschluss 55 ist.

Das sechste Versuchsmodul 48.6 hat am unteren Ende des Zylinders 115 ein Ablassventil 87, das auf eine Bohrung 65 in der Basisplatte 49 ausgerichtet ist.

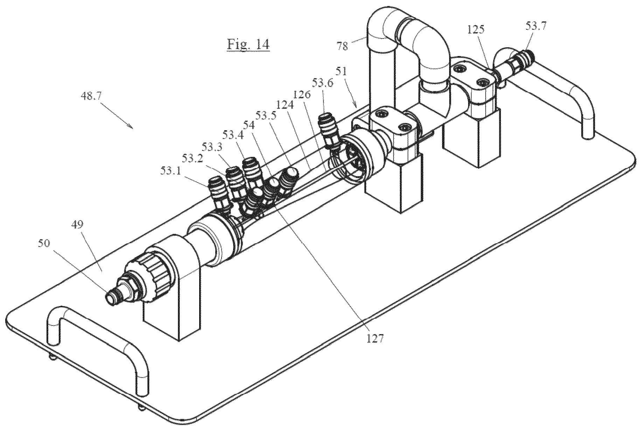

Gemäß Fig. 14 umfasst das siebte Versuchsmodul 48.7 eine oberhalb der Basisplatte 49 gehaltene horizontale Venturi-Düse 124 aus einem transparenten Material, die an einem Ende mit dem zweiten Anschluss 50 verbunden ist. Am anderen Ende ist die Venturi-Düse 124 über eine Auslassleitung 78 mit dem ersten Auslass 51 verbunden. An verschiedenen Stellen von Düse und Diffusor der Venturi-Düse 124 sind Druckmessbohrungen vorhanden. Diese sind mit von der Außenseite der VenturiDüse vorstehenden zweiten Druck- und Referenzdruckanschlüssen 53.1 bis 53.6, 54 verbunden. Der zweite Referenzdruckanschluss 54 befindet sich an der engsten Stelle der Venturi-Düse 124. Von dem anderen Ende ragt durch ein Abdichtelement 125 hindurch eine Drucklanze 126 in die Venturi-Düse hinein. Die Drucklanze 126 ist mit ihrer Eintrittsöffnung 127 an verschiedenen Positionen in der Venturi-Düse 124 positionierbar. Am anderen Ende ist sie mit einem zweiten Druckanschluss 53.7 verbunden.

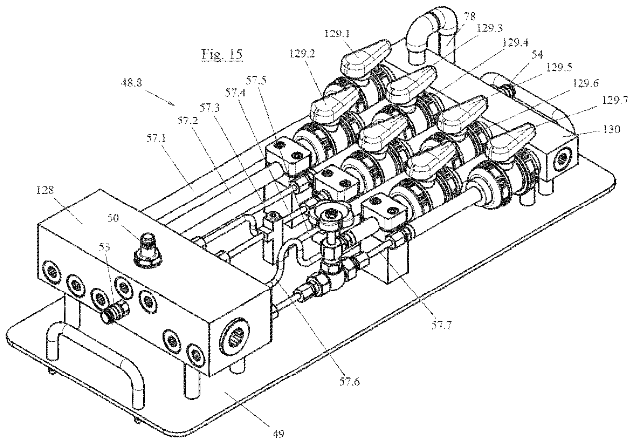

Gemäß Fig. 15 umfasst das achte Versuchsmodul 48.8 mehrere horizontale, gleichlange Rohre 57.1 bis 57.7, die parallel nebeneinander auf der Basisplatte 49 gehalten sind. Die Rohre 57.1 bis 57.7 sind an den ersten Rohrenden mit einem Verteilerblock 128 verbunden, der den zweiten Anschluss 50 aufweist. An den zweiten Rohrenden sind die Rohre 57.1 bis 57.7 über Handhähne 129.1 bis 129.7 mit einem Abflussblock 130 verbunden, der über eine Auslassleitung 78 mit dem ersten Auslass 51 verbunden ist. Am Verteilerblock 128 ist ein zweiter Druckanschluss 53 und am Abflussblock ist ein zweiter Referenzdruckanschluss 54 angeordnet.

Die Rohre 57.1 bis 57.7 sind in der folgenden Weise mit und ohne Einbauten ausgebildet: Rohr 57.1 mit großem Innendurchmesser und eingebauter Düse, Rohr 57.2 mit großem Innendurchmesser und eingebauter Blende, Rohr 57.3 mit kleinem Innendurchmesser und eingebauter Düse, Rohr 57.4 mit kleinem Innendurchmesser, S-Krümmung und eingebauter Düse, Rohr 57.5 mit kleinem Innendurchmesser, scharfkantiger S-Krümmung und eingebauter Düse, Rohr 57.6 mit kleinem Innendurchmesser, Doppel-S-Krümmung und eingebauter Düse und Rohr 57.7 mit kleinem Innendurchmesser, eingebautem Ventil und eingebauter Düse.

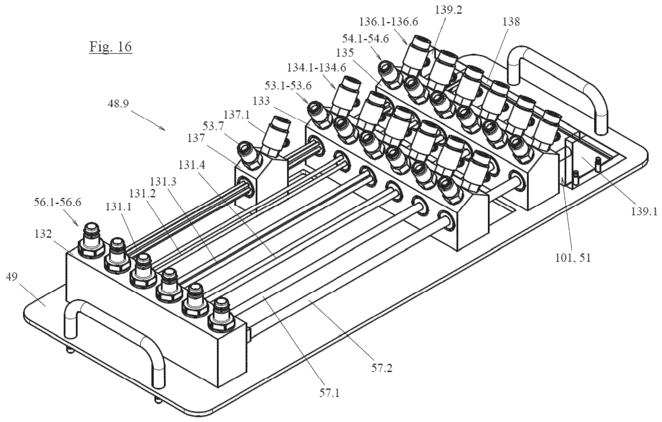

Gemäß Fig. 16 weist das neunte Versuchsmodul 48.9 auf einer Basisplatte 49 nebeneinander gehaltene horizontale Rohre 57.1, 57.2 und Rohrbündel 131.1 bis 131.4 auf. An dem einen Ende sind die Rohre 57.1, 57.2 und Rohrbündel 131.1 bis 131.4 auf der Basisplatte 49 in einem ersten Lagerblock 132 gehalten, der für jedes Rohr 57.1, 57.2 und jedes Rohrbündel 131.1 bis 131.4 einen eigenen zweiten Anschluss 50.1 bis 50.6 aufweist. Etwa bei zwei Drittel ihrer Länge sind die Rohre 57.1, 57.2 und Rohrbündel 131.1 bis 131.4 auf der Basisplatte 49 in einem zweiten Lagerblock 133 gehalten, der für jedes Rohr 57.1, 57.2 und jedes Rohrbündel 131.1 bis 131.4 einen eigenen zweiten Druckanschluss 53.1 bis 53.6 und ein eigenes erstes Entlüftungsventil 134.1 bis 134.6 aufweist.

Kurz vor ihrem anderen Ende (bei ca. 95% ihrer Länge) sind die Rohre 57.1, 57.2 und Rohrbündel 131.1 bis 131.4 auf der Basisplatte 49 in einem dritten Lagerblock 135 gehalten, der für jedes Rohr 57.1, 57.2 und Rohrbündel 131.1 bis 131.4 einen eigenen zweiten Referenzdruckanschluss 54.1 bis 54.6 und ein eigenes zweites Entlüftungsventil 136.1 bis 136.6 aufweist.

Das Rohrbündel 131.1 mit den meisten Rohren ist zusätzlich bei etwa 40% seiner Länge auf der Basisplatte 49 in einem vierten Lagerblock 137 gehalten, der einen zweiten Druckanschluss 53.7 und ein drittes Entlüftungsventil 137.1 aufweist.

Die anderen Enden der Rohre befinden sich oberhalb einer rechteckigen, zweiten Öffnung 101 in der Basisplatte 49, deren Hauptausdehnungsrichtung senkrecht zu den Rohren 57.1, 57.2 verläuft und die den ersten Auslass 51 bildet.

Vom Rand der zweiten Öffnung 101 gegenüber den offenen Enden der Rohre 57.1, 57.2 und Rohrbündel 131.1 bis 131.4 steht eine hintere Spritzschutzwand 138 von der Basisplatte 49 vor. Diese ist zu den Rohren hin geneigt. Von den zu den Rohren parallelen seitlichen Rändern der zweiten Öffnung 101 stehen kurze seitliche Spritzschutzwände 139.1, 139.2 vertikal von der Basisplatte 49 hoch. Bei einer alternativen Ausführungsart ist am Rand der zweiten Öffnung 101 ein transparenter Kasten angebracht, der vom Rand der zweiten Öffnung 101 gegenüber den offenen Enden der Rohre und Rohrbündel und an den zu den Rohren der parallelen seitlichen Rändern vertikal von der Basisplatte 49 hochstehende hintere und seitliche Spritzschutzwände aufweist. Oberhalb der zweiten Öffnung 101 weist der Kasten eine obere Spritzschutzwand auf. An der Innenseite der hinteren Spritzschutzwand ist ein offenporiger Schaum angebracht, der das Zurückspritzen von auftreffender Flüssigkeit zuverlässig vermeidet.

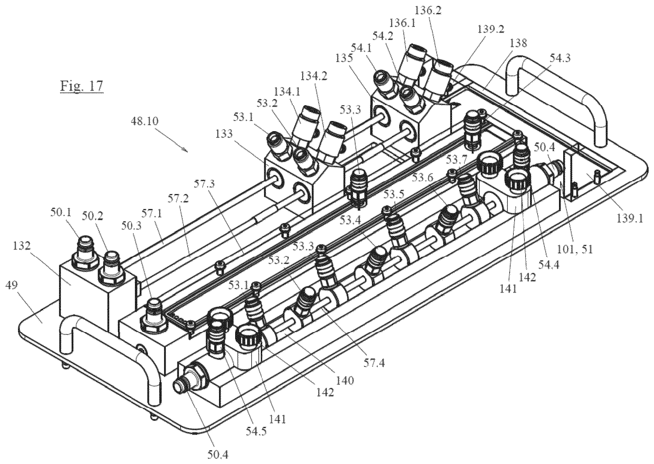

Gemäß Fig. 17 hat das zehnte Versuchsmodul 48.10 auf einer Basisplatte 49 nebeneinander gehaltene horizontale Rohre 57.1 bis 57.4. Diese umfassen ein hydraulisch glattes Rohr 57.1 und ein hydraulisch raues Rohr 57.2, die an einem Ende in einem ersten Lagerblock 132 auf der Basisplatte 49 gehalten sind, der für jedes Rohr 57.1, 57.2 einen eigenen zweiten Anschluss 50.1, 50.2 aufweist. Auf etwa 60% ihrer Länge sind die Rohre 57.1, 57.2 in einem zweiten Lagerblock 133 auf der Basisplatte 49 gehalten, der für jedes Rohr 57.1, 57.2 einen zweiten Druckanschluss 53.1, 53.2 und ein erstes Entlüftungsventil 134.1, 134.2 aufweist. Kurz vor ihrem anderen Ende (ca. bei 95% ihrer Länge) sind die Rohre 57.1, 57.2 in einem dritten Lagerblock 135 gehalten, der für jedes Rohr 57.1, 57.2 einen zweiten Referenzdruckanschluss 54.1, 54.2 und ein zweites Entlüftungsventil 136.1, 136.2 aufweist. Die anderen Enden der Rohre 57.1, 57.2 sind oberhalb einer rechteckigen zweiten Öffnung 101 in der Basisplatte 49 angeordnet, deren Hauptausdehnungsrichtung senkrecht zu den Rohren 57.1, 57.2 verläuft und die den ersten Auslass 51 bildet.

Daneben ist auf der Basisplatte 49 ein rechteckiges Rohr 57.3 angeordnet, das denselben hydraulischen Durchmesser wie die beiden vorgenannten Rohre 57.1, 57.2 aufweist. Das rechteckige Rohr 57.3 hat an dem einen Ende einen zweiten Anschluss 50.3, bei etwa 60% seiner Länge einen zweiten Druckanschluss 53.3 und kurz vor seinem anderen Ende (bei ca. 95% seiner Länge) einen zweiten Referenzdruckanschluss 54.3. Das andere Ende des Rechteckrohres ist oberhalb der zweiten Öffnung 101 angeordnet, so dass die Versuchsflüssigkeit aus diesem Ende des rechteckigen Rohres 57.3 in die zweite Öffnung 101 austreten kann.

Daneben ist auf der Basisplatte 49 in einer Rinne 140 ein viertes Rohr 57.4 gelagert, das an beiden Enden einen zweiten Anschluss 50.4 aufweist. Zwischen den beiden Enden stehen von dem Rohr eine Vielzahl zweiter Druck- bzw. Referenzdruckanschlüsse 53.1 bis 53.7, 54.4, 54.5 vor, wobei benachbarte Anschlüsse jeweils abwechselnd in verschiedene Richtungen spitzwinklig zueinander ausgerichtet sind, um leichter Schlauchkupplungen an benachbarten Anschlüssen befestigen zu können. An seinen beiden Enden ist das Rohr 57.4 mittels Schellen 141 und Rändelschrauben 142 an der Rinne 140 befestigt. Hierdurch ist es leicht möglich, das Rohr 57.4 zu lösen und in umgekehrter Ausrichtung in den Kanal 140 einzusetzen.

Auch bei dem zehnten Versuchsmodul 48.10 ist die zweite Öffnung 101 am von den Rohren 57.1 bis 57.4 entfernten Rand und an den benachbarten seitlichen Rändern durch Spritzschutzwände 138, 139.1 und 139.2 eingefasst. Gemäß einer alternativen Ausführungsart ist dort als Spritzschutz ein transparenter Kasten wie bei der alternativen Ausführungsart von FIG. 16 angeordnet.

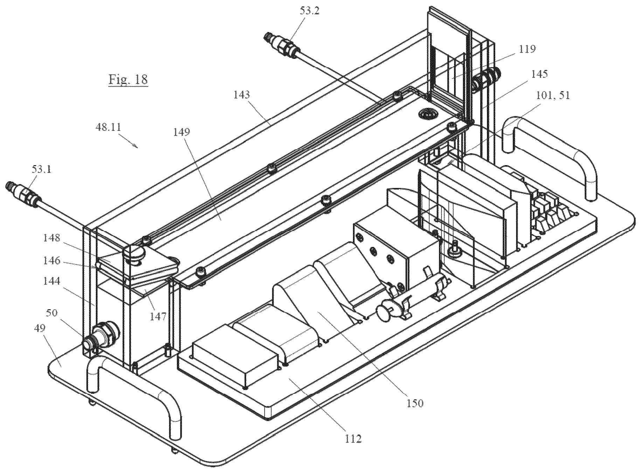

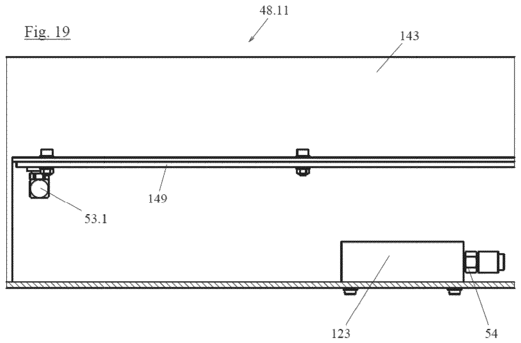

Gemäß Fig. 18 und 19 weist das elfte Versuchsmodul 48.11 auf der Basisplatte 49 einen horizontalen Strömungskanal 143 mit einer vorderen Wand 119 aus transparentem Material auf. Der Strömungskanal 143 erstreckt sich zwischen einem ersten Schacht 144 und einem zweiten Schacht 145. Der erste Schacht 144 weist auf einer Seite den zweiten Anschluss 50 auf. Über eine als herausnehmbaren Einsatz ausgebildete Schlitzdüse 146, die eine horizontale erste Platte 147 und eine demgegenüber geneigte zweite Platte 148 umfasst, ist der erste Schacht 144 mit dem Eingang des Strömungskanals 143 verbunden. Die Schlitzdüse 146 ist beispielsweise mittels Schrauben im Strömungskanal 143 befestigt. Mittels der Schlitzdüse 146 kann eine sehr schnelle Strömung der Versuchsflüssigkeit im Strömungskanal 143 erzeugt werden. Das andere Ende des Strömungskanals 143 ist über den zweiten Schacht 145 mit einer zweiten Öffnung 101 in der Basisplatte 49 verbunden. Neben dem ersten Schacht 144 und dem zweiten Schacht 145 ist an eine Bodenwand 149 des Strömungskanals 143 jeweils ein zweiter Druckanschluss 53.1, 53.2 angeschlossen. Die Bodenwand 149 ist aus gepulvertem Stahlblech hergestellt. Die zweiten Druckanschlüsse 53.1, 53.2 ragen durch zwei Bohrungen in der Bodenwand hindurch in den Strömungskanal 143 hinein. Auf der Basisplatte 49 befindet sich ein zusätzliches Becken 123 mit Überlauf, das den zweiten Referenzdruckanschluss 54 aufweist.

Auf einem Halter 112 auf der Basisplatte 49 sind verschiedene Einbauten 150 gelagert, die in den Strömungskanal 143 einsetzbar und darin mittels eingebauter Magneten fixierbar sind. Die Einbauten 150 werden mittels der eingebauten Magneten an der Bodenwand 149 aus Stahlblech gehalten.

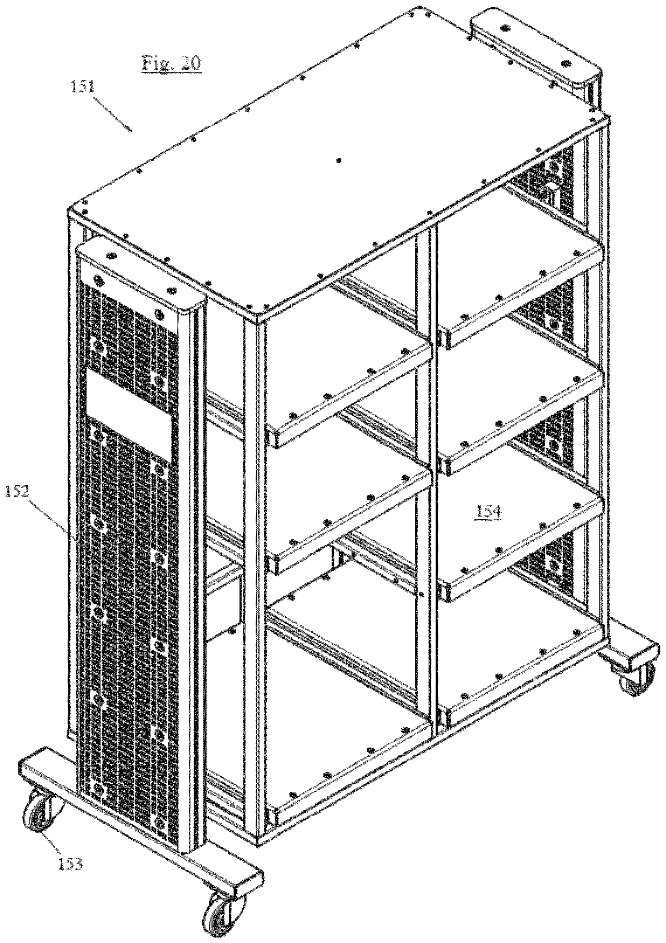

Fig. 20 zeigt ein fahrbares Regal 151 mit einem Regalrahmen 152 mit Rollen 153 und mehreren Regalböden 154, auf denen das Versuchsgerät 1 und mehrere verschiedene Versuchsmodule 48.1 bis 48.11 aufbewahrt werden können.

Es folgen weitere Erläuterungen zum Gebrauch der Versuchsgeräte:

Anschließen und Betrieb der Versuchsmodule an die Vorrichtung:

Das Modul 48.1 bis 48.11 wird auf das Hauptgerät 1 gestellt. Durch die Abmaße und den Aufdruck ist die genaue Positionierung vorgegeben. Das Hauptgerät erkennt das aufgesetzte Modul durch eine RFID Kennung und schaltet das Touchpanel 16 in den dazugehörigen Modus.

Mit Hilfe des Touchpanels 16 erfolgt eine strukturierte Führung durch die Module bis hin zum Versuch:

- Im Infobereich zu dem Modul wird der grundlegende Aufbau und die verfolgten Lerninhalte in kurzer Form wiedergegeben.
- In der Versuchseinrichtung wird aufeinanderfolgend die Verschlauchung mit dem Hauptwasseranschluss und je nach Bedarf mit Druckmessleitungen sowie weiteren Messanschlüssen schematisch gezeigt.
- In der darauffolgenden automatischen Entlüftung wird eine Prozedur abgefahren, welche vorhandene Luft in den Messleitungen und den Druckaufnehmern herausfördert.
- Für die anschließenden Versuche gibt es eine Hilfesequenz die den wesentlichen Ablauf des Versuchs in einer kurzen Bildfolge aufzeigt.

Mit internetfähigen Geräten (Handy, Tablet, PC) kann über Internet oder einen WLAN-Access-Point auf die Oberfläche des Touchpanels zugegriffen werden. Es ist möglich sich unabhängig von der aktuell gezeigten Oberfläche im Bedienermenü zu bewegen.

Das Bedienen des Hauptgerätes über diese Verbindung kann Optional durch die Programmierung festgelegt werden.

Bedienung und Durchführung der Versuche:

Die Bedienung erfolgt über das eingebaute Touchpanel 16. Die erste Pumpe 12 kann in der Drehzahl gesteuert werden. Je nach Versuch ist auch die Regelung auf Druck oder Volumenstrom möglich.

Durch die Steuerung / Regelung der ersten Pumpe 12 ist der Wirkungsgrad besser als bei der Drosselung. Der Vorgang ist dadurch energiesparender, ein geringerer Wärmeeintrag ist die Folge.

Es besteht die Möglichkeit, das Wasser aktiv zu beheizen. Dadurch ändert sich die Viskosität, was Änderungen in der Strömungsausbildung zur Folge hat. In verschiedenen Versuchen kann dies gemessen werden. Das Hauptgerät 1 besitzt eine intern zuschaltbare Heizeinrichtung 37. Alternativ kann auch ein Kaltwassersatz angeschlossen werden um das Wasser zu kühlen, was speziell in wärmeren Ländern interessant sein kann.

Messen und Aufnehmen der Messwerte:

Die Messtechnik ist mit Hilfe des Touchpanels 16 digitalisiert. Messwerte der Versuche werden durch Drücken eines Knopfes in den Speicher übernommen. In den meisten Moduloberflächen wird dabei ein Diagramm erstellt.

Zum Messen des Volumenstroms wird ein magnetisch induktiver Messaufnehmer 28 genutzt. Diese Strömungsmessgeräte besitzen eine hohe Genauigkeit mit einem breiten Messbereich.

Um über den messbaren Bereich des Volumenstroms eine ausreichend genaue Druckmessung zu gewährleisten, werden mehrere Druckaufnehmer 30.1 bis 30.3 parallel betrieben. Die Druckaufnehmer zum Messen der kleinen Drücke sind unempfindlich gegenüber dem maximal anstehenden Druck. Über den Ausgabewert erkennt die Software welcher Aufnehmer auszuwerten ist.

An manchen Modulen sind Drücke an verschiedenen Stellen zu messen. Mit acht mechanischen Druckanschlüssen 14.1 bis 14.7, 15 können bis zu sieben Druckdifferenzen gemessen werden. Durch Magnetventile 31.1 bis 31.7 wird einer dieser Drücke freigeschaltet. Dieser liegt dann an den Druckmessaufnehmern 30.1 bis 30.7 an und kann nach einer Einschwingzeit übernommen werden. Sind bei einem Versuch mehrerer Drücke bei einem Volumenstrom zu messen, so kann dies auch in einer Messsequenz erfolgen.

Volumenstrom, Temperatur und Drücke werden in der integrierten Messtechnik des Hauptgerätes 1 gemessen. Jeder Messpunkt wird mit der Messzeit versehen. Diese Daten können als Datei abgespeichert werden. Eine separate Auswertung auf einem PC ist dadurch möglich.

Die Bedienoberfläche ist so gestaltet, dass wesentliche Zusammenhänge in der Darstellung erfasst werden können Es ist möglich die Bedienoberfläche mit den Anzeigewerten als Bild zu speichern.

Aufsetzbare Module:

Alle Module 48.1 bis 48.11 sind so ausgelegt, dass eine maximale Genauigkeit der Messergebnisse ermöglicht wird. Durch die Minimierung von Fehlereinflüssen ergibt sich eine gute Reproduzierbarkeit.

Die Module besitzen alle einen Wasseranschluss für die Durchströmung mit Wasser. Druckmessleitungen oder der Anschluss von weiterer modulspezifischer Messtechnik ist versuchsabhängig.

### Erstes Modul (48.1) - Visualisierung der Rohrströmung:

Der Versuch ist ebenfalls als "Osborne Reynolds-Versuch" bekannt. In einer Rohrströmung wird ein Stromfaden mit Tine visualisiert. Der Strahl kann optisch sehr gut wahrgenommen werden. Ab einer bestimmten Strömungsgeschwindigkeit erkennt man das Entstehen erster Verwirbelungen. Diese nehmen mit zunehmender Strömungsgeschwindigkeit zu, bis letztlich gar kein Tintenstrahl mehr zu erkennen ist.

Den Versuch gibt es als stehenden und liegenden Versuchsaufbau. Aufgrund der Platzverhältnisse wird die liegende Art verwendet.

Durch den Einsatz der Heizung lässt sich zeigen, dass ein Temperatureinfluss vorhanden ist. Im Weiteren kann dies theoretisch mit der Reynoldszahl begründet werden.

Zur Visualisierung einer Sekundärströmung wird am Ende der Rohrstrecke ein klarer Rohrkrümmer 64 (Wendel) angebracht. Die Strömung fließt durch den Rohrkrümmer und bildet innerhalb des Rohrkrümmers zwei gegenläufige Wirbel in Strömungsrichtung aus.

### Zweites Modul (48.2) - Messen des Strömungsprofils:

In diesem Versuch wird ein Rohr 57 durchströmt. Nach einer Einlaufstrecke hat sich das Strömungsprofil ausgebildet. Im Wesentlichen lässt sich die Strömungsausbildung zwischen laminarer und turbulenter Strömung unterscheiden.

Beide Strömungsausbildungen haben die Haftbedingung gemeinsam, welche aussagt, dass die Strömungsgeschwindigkeit direkt an der Wand, die benetzende erste Fluidschicht, gleich Null ist.

Bei laminarer Strömung nimmt die Strömungsgeschwindigkeit bis zur Rohrmitte hin zu. Der Verlauf entspricht einer Parabel.

Bei der turbulenten Strömung nimmt die Strömungsgeschwindigkeit ebenfalls zu. Der Anstieg der Geschwindigkeit ist im Wandbereich jedoch größer. In der Mitte des Rohrs ist der Verlauf eher abgeplattet.

Mit einer Kanüle 71, welche durch eine Druckmessleitung mit einem Druckmessaufnehmer verbunden ist lässt sich der Staudruck quer durch das Rohr messen. Dieser Staudruck ist das Resultat der Strömungsgeschwindigkeit. Es ist so möglich die Strömungsprofile bei verschiedenen Reynoldszahlen zu messen.

Die Strömungsausbildung ist wesentlich von der Reynoldszahl und der Geometrie abhängig. Die Reynoldszahl Re wird aus der Strömungsgeschwindigkeit, dem Durchmesser (beim Rohr) und der Viskosität berechnet. Das Rohr ist weitgehend untersucht und bekannt. Die kritische Reynoldszahl $Re_{krit}$ ist der Strömungszustand, bei dem die Strömung nicht mehr selbstständig in die laminare Strömungsform zurückkehrt. Wird Turbulenz durch Störungen angeregt, so kann diese nicht mehr abklingen. Es ist dennoch möglich laminare Strömung bei Reynoldszahlen über der kritischen Reynoldszahl vorzufinden. Dies ist speziell bei Einlaufstrecken der Fall. Um diesen Effekt zu zeigen kann das Modul zwei Einlaufstrecken aufweisen:

- Eine Einlaufstrecke für laminare Strömungsausbildung. Sie zeigt die laminare Strömung und dass diese auch bei höheren Reynoldszahlen als $Re_{krit}$ vorliegen kann. Dies wird durch die Beschleunigung in einer Düse erzeugt. Übergänge im Rohr sind möglichst glatt.
- Eine Einlaufstrecke für turbulente Strömungsausbildung. Sie zeigt, dass die Strömung sich abweichend verhält, wenn Turbulenz angeregt wird. Dies wird durch einen freistehenden, scharfkantigen Einlauf in das zu messende Rohr erzeugt.

### Drittes Modul (48.3) - Visualisierung von Stromlinien:

Durch die Erzeugung von Wasserstoff mit Hilfe der Elektrolyse wird das Wasser nicht von Tinte eingefärbt. Die Handhabung erleichtert sich dadurch wesentlich.

Die Versuchskörper 80.1, 80.2 können die Strömung durch Querschnittsverengung beschleunigen oder durch Querschnitterweiterung verzögern.

Im Bild ist aus der Sicht auf die transparente Frontscheibe links oben ein Reinigungsschieber 89 zu erkennen. Schmutz und an der Innenseite anhaftende Bläschen können damit entfernt werden, indem dieser von oben in dem Kanal eingeführt wird und entsprechend über die Flächen gezogen wird.

### Viertes Modul (48.4) - Kontinuitätsgleichung:

Das Modul besteht aus einem durchflossenen Rohr 57 mit großem Durchmesser. Durch einen Übergang wird das Rohr auf die Hälfte des Querschnittes verjüngt. Die Strömungsgeschwindigkeit steigt dadurch um den Faktor zwei.

Die Strömungsgeschwindigkeit wird durch Flügelräder 97, 98 angezeigt, welche von der Strömung angetrieben werden. Diese Flügelräder besitzen die gleiche Steigung. Ebenso ist die Halterung der Flügelräder identisch.

Zum Erfassen der Drehfrequenz sind in den Flügelrädern kleine, starke Magnete eingelassen. Die Änderung des magnetischen Feldes wird durch Aufnehmer erfasst. Am Display wird die Drehzahl angezeigt.

### Fünftes Modul (48.5) - Messung von Strahlkräften:

Das Modul dient dazu die Kraft eines Wasserstrahls beim Auftreffen auf einen Körper zu messen. Wesentlich ist hierbei die Umlenkung des Strahls. Je mehr der Strahl umgelenkt wird, desto größer wird die Kraft, welche gemessen wird.

Um dies zu demonstrieren sind verschiedene Prallkörper 106 vorhanden. Diese werden mit einem Waagebalken 105 in den Strahl positioniert. Der Waagebalken ist drehbar gelagert, als Auflager auf der gegenüberliegenden Seite des Strahls ist ein Kraftaufnehmer 107. Mit diesem wird die Kraft des Strahls gemessen. Der Kraftaufnehmer ist durch einen mechanischen Anschlag vor Überlast geschützt.

Um den Einfluss des Volumenstroms zu zeigen sind zwei Düsen vorhanden. Die große Düse hat die doppelte Querschnittsfläche der kleinen. Wabengleichrichter helfen in dem kurzen Aufbau einen glatten Strahl an der Düse zu erzeugen.

Weiterhin kann der Vordruck an der Düse gemessen werden. Damit kann gezeigt werden, welcher Druck zu welchem Volumenstrom führt und letztendlich, welche Kraft dabei entsteht.

Die Versuchsanordnung wird von einem Auffangzylinder 102 aus Plexiglas abgedeckt. Die Vorgänge werden so deutlich sichtbar.

Sechstes Modul (48.6) - Freier Ausfluss:

Das Gerät demonstriert den Ausfluss aus Ausströmöffnungen 116 unter einem vorgegebenen Wasserstand.

Der Ausfluss wird wesentlich vom Druck vor der Öffnung bestimmt. Dieser wird durch die Höhe der Wassersäule vorgegeben. Im sechsten Modul wird der Wasserstand über eine Regelung selbstständig angefahren. Das Messen der Füllstandshöhe erfolgt über den Wasserdruck.

Mit zunehmendem Druck steigt die Austrittsgeschwindigkeit an der Öffnung. Der dabei entstehende Wasserstrahl ist eine mehr oder weniger gestreckte Parabel und entspricht der Wurfparabel. Diese Absenkung der Parabel wird mit einem digitalen Messschieber an vorgegebenen Punkten gemessen.

Die gemessene Parabel lässt sich mit einer mathematisch hergeleiteten Kurve vergleichen.

Die Ausströmöffnung kann ausgewechselt werden. Es gibt insgesamt vier Öffnungen. Variieren lässt sich der Durchmesser, sowie der Einlauf der Öffnung (gerundet oder scharfkantig).

Mit den verschiedenen Durchmessern lässt sich die Beziehung von Geschwindigkeit und Volumenstrom aufzeigen. Die unterschiedlichen Einläufe zeigen Verluste beim Ausströmen auf. Bei scharfkantiger Öffnung ist die Parabel weniger gestreckt durch zusätzliche Verluste.

Siebtes Modul (48.7) - Gesetz von Bernoulli:

Das siebte Modul zeigt an einer Venturidüse die Zusammenhänge der Wandlung von Druck in Geschwindigkeit.

Eine Venturidüse 124 wird durchströmt und der statische Druck wird mit Druckmessbohrungen an der Wand gemessen. Der dynamische Druck kann mit einer verstellbaren Drucklanze 126 ebenfalls an diesen Stellen gemessen werden.

Die Messstellen sind bei Düse und Diffusor auf gleichen Durchmessern, so dass später im Diffusor der Druckrückgewinn mit dem Ursprungsdruck verglichen werden kann.

Aus der Gleichung von Bernoulli ergibt sich eine quadratische Proportionalität zwischen Druck und Geschwindigkeit: $\Delta p \sim c^2$

Ebenso ist die Strömungsgeschwindigkeit vom Durchmesser abhängig: $c \sim \dfrac{1}{d^2}$ Daraus folgt:

$$\Delta p \sim c^2 \sim \frac{1}{d^4}$$

Die Kontur der Düse ist so geformt, dass der statische Druck gleichmäßig über die Länge fällt $\Delta p \sim L$. Die Messpunkte sind gleichmäßig verteilt - der Druck von Messstelle zu Messstelle fällt gleichmäßig. Die Proportionalität $\Delta p \sim \dfrac{1}{d^4}$ lässt sich so gut zeigen.

Die Venturidüse lässt sich im Aufbau umdrehen und kann dadurch in der Gegenrichtung durchströmt werden. Höhere Druckverluste lassen sich so zeigen. In der durchströmten Gegenrichtung deuten Abweichungen von der ursprünglich linearen Kurve auf Ablösungen hin.

Achtes Modul (48.8) - Verluste in Rohrleitungselementen:

Auf dem Modul befinden sich 7 didaktisch aufeinander aufbauende Rohrstrecken 57.1 bis 57.7. Diese sind alle zwischen einem Verteilerblock 128 und einem Abflussblock 130 eingebaut. Im Endbereich dieser Strecken sind Handhähne mit denen die zu untersuchende Rohrstrecke freigeschaltet wird. Der Druckverlust wird über die gesamte Rohrstrecke gemessen.

Der Druckverlust ist wesentlich durch die Strömungsgeschwindigkeit bestimmt. Es dominiert der Druckverlust in den zu untersuchenden Rohreinbauten.

Folgende Einbauten werden miteinander verglichen:

- Düse im großen Rohr
- Blende im großen Rohr
- Düse und kleines Rohr
- Düse und kleines Rohr mit S-Krümmung
- Düse und kleines Rohr mit scharfkantiger S-Krümmung
- Düse und kleines Rohr mit Doppel-S-Krümmung
- Düse und kleines Rohr mit Ventileinbau

## Neuntes Modul (49.9) - Grundlagen der Rohrreibung:

Mit dem Modul sollen Zusammenhänge der Rohrreibung untersucht werden. Es wird speziell auf die Nutzung des Moody-Diagramms hingearbeitet, was durch den Gebrauch von Ähnlichkeitszahlen erst richtig greifbar wird.

Das Moody-Diagramm basiert auf dimensionslosen Kennzahlen (Reynolds & Rohrreibungszahl) und kann dadurch auf alle Durchmesser und Strömungsgeschwindigkeiten angewendet werden.

Die sechs Versuchsstrecken (Rohre und Rohrbündel 57.1, 57.2, 131.1 bis 131.4) auf dem Modul sollen:
- Die Übertragbarkeit der Messwerte auf die dimensionslosen Kennzahlen zeigen.
- Einen maximalen Bereich in dem Diagramm abdecken, da die einzelnen Versuchsstrecken aufgrund von Genauigkeit bei Volumenstrom & Druckmessung nur einen begrenzten Teil des Diagramms zeigen können. Es gibt also Überscheidungen bei den Messungen von zB Ø1 zu Ø2, wobei beim großen Durchmesser eine höhere Reynoldszahl erreicht wird.
- Insbesondere können dabei Proportionalitäten gezeigt werden, z.B.:

Laminar: $\Delta p \sim \dot{V}$ $\qquad \Delta p \sim 1/d^4$
Turbulent: $\Delta p \sim \dot{V}^2$

Die Durchmesser der Rohrstrecken sind so zu dimensionieren, dass die Bandbreite der ersten Pumpe maximal ausgenutzt wird. Dies ist geringer Durchfluss bei hohem Druck und umgekehrt. Grenzen werden hierbei in erster Linie beim Messen von Druck und Volumenstrom nach unten gesetzt.

- Rohre mit kleinem Durchmesser erzeugen eine hohe, gut messbare Druckdifferenz. Der Volumenstrom ist dabei jedoch sehr klein, so dass hier mehrere Rohre parallel durchströmt werden. Dies erhöht die Messgenauigkeit beim Volumenstrom.
- Rohre mit großem Durchmesser haben einen gut messbaren Durchfluss, jedoch kann der Druckverlust nicht bei beliebig kleinen Durchflüssen gemessen werden.

Weitere wesentliche Merkmale des Moduls sind:

- Freie Rohrenden, um am Freistrahl die Auswirkungen von laminarer und turbulenter Strömung zu erkennen. Die Oberfläche des Strahls wechselt von glatter durchsichtiger Struktur in eine raue, verwaschene Oberfläche.
- Für eine gut ausgebildete Rohrströmung Messung nach genügend langer Einlaufstrecke.
  Der im Moody-Diagramm angegebene Rohrwiderstand bezieht sich auf die voll ausgebildete Strömung.
- Im Rohreintritt kann zunächst von einer Kolbenströmung ausgegangen werden. Je nach genauer Strömungsausbildung (laminar/turbulent) findet in der Einlaufstrecke die Ausbildung von der Kolbenströmung zur ausgebildeten Strömung statt. In der Einlaufstrecke ist der Druckverlust erhöht. Um diesen erhöhten Wert nicht zu messen, findet die Messung erst in einem hinreichenden Abstand vom Einlauf statt.

## Zehntes Modul (48.10) - Druckverlauf entlang der Einlaufstrecke:

Dieses Modul vertieft die Inhalte des neunten Moduls. Dazu dient ein Referenzrohr 57.1. Dieses hat einen Durchmesser von 4 mm und ist hydraulisch glatt. Der Druckverlust wird nach einer Einlaufstrecke gemessen. Der anschließende Vergleich findet statt gegenüber:

- Hydraulisch raues Rohr 57.2
  Es wird der Einfluss der Wandrauigkeit gezeigt. Neu: Diese Rauigkeit wird Fertigungstechnisch mit einem Gewindebohrer erzeugt, dessen Spitzen wenige 1/100 mm in die glatte Oberfläche des Rohres schneiden.
- Rechteckiges Rohr 57.3 mit $d_{hyd}$ gleich 4 mm. Es findet ein Vergleich mit einem rechteckigen Rohr statt. Bei Abweichungen zum runden wird der hydraulische Durchmesser herangezogen. Unterschiede werden speziell beim Übergang laminar - turbulent auffällig. Diese werden herausgearbeitet.

Ein weiteres Element ist das Rohr 57.4 mit vielen Druckmessbohrungen entlang der Einlaufstrecke. Hier wird der Druckverlust entlang der Einlaufstrecke gemessen. Dieser ist speziell zu Beginn des Einlaufes erhöht. Es gibt Unterschiede in der Beruhigungsstrecke zwischen laminarer und turbulenter Strömungsausbildung.

Um die Unterschiede von laminarer zu turbulenter Strömung zu messen kann das Rohr von beiden Richtungen durchströmt werden.

- Die eine Seite ist als Düse gestaltet, um eine laminare Strömung zu erzeugen.
- Die andere Seite ist ein scharfkantiger Einlauf. Dieser erzeugt bei der Einströmung schon Verwirbelungen, was die Turbulenz direkt zu Beginn anregt. Dazu steht das durchströmte Rohr frei im größeren Rohr, welches an die Wasserversorgung angeschlossen wird.

Neben dem Vergleich des beschriebenen Druckverlustes der Einlaufstrecke kann an den beiden Einläufen auch der Einlaufverlust an der Verengung gemessen werden. Dies ist ebenfalls ein ständig wiederkehrender Fall in der Betrachtung der Verluste.

### Elftes Modul (48.11) - Offenes Gerinne:

Der sehr kleine Strömungskanal 143 ist in erster Linie als Demonstrationsgerät gedacht, um den Einsatz und die wesentlichen Zusammenhänge verschiedener Kanaleinbauten 150 zu zeigen. Für einige Versuche sind die Wasserstände vor und nach dem Kanaleinsatz von Interesse. Dazu gibt es zwei Druckmessanschlüsse mit denen die Wasserhöhe durch den Druck bestimmt werden kann.

Zur Demonstration von Energiehöhen und Verlusten, sowie zur Ermittlung von Durchflüssen sind folgende Einbauten vorgesehen:

- Breitkroniges Wehr scharfkantig
- Breitkroniges Wehr mit abgerundeten Kanten
- Rundkroniges Wehr
- Venturikanal
- Pfeiler (nur Energiehöhen)

Mit den weiten Einbauten kann die Energiedissipation im Tosbecken demonstriert werden:

- Rundkroniges Wehr mit Schanze
- Endschwelle
- Zahnschwelle

Folgender Einbau zeigt die Möglichkeit, wie auf ein Wasserstand reguliert werden kann:

- Heber

All diese Einbauten werden mit Magneten im Kanal fixiert. Unter dem durchströmten Gerinne ist eine Stahlplatte angebracht, welche dies ermöglicht.

Der Wechselsprung kann durch den folgenden Einsatz genauer untersucht werden. Dieser Einsatz wird fest montiert:

- Schlitzdüse

Über Druckmessung lässt sich der Wasserstand im vorderen Bereich des Kanals und im hinteren Bereich des Kanals messen. Die Messwerte können in einer Datei ausgegeben werden und in folgenden Berechnungen verwendet werden. Weiterhin können die Werte für Animationen auf dem Display genutzt werden.

Die Düse 146 erzeugt eine schießende Strömung im vorderen Teil des Kanals. Wird diese schießende Strömung verzögert, so ergibt sich eine geringere Strömungsgeschwindigkeit bei einem höheren Wasserstand. Dieses Phänomen ist der Wechselsprung.

Die kritische Geschwindigkeit für diesen Versuch wird mit der Froude-Zahl Fr angegeben. Bei "1" ist die Fließgeschwindigkeit im Kanal gleich der Wellengeschwindigkeit. Die Wellengeschwindigkeit berechnet sich aus der Tiefe L des strömenden Gewässers. Die Froude-Zahl ergibt sich als Verhältnis daraus:

$$Fr = \frac{c}{\sqrt{g \cdot L}}$$

Um dies zu untersuchen wird eine Düse in den Anfangsbereich des Kanals eingebaut. Diese hat eine definierte Höhe. Dadurch kann mit dem gemessenen Volumenstrom die Strömungsgeschwindigkeit im Querschnitt bestimmt werden. Aus der definierten Düsenhöhe und der Strömungsgeschwindigkeit lässt sich die Froude-Zahl der überkritischen Geschwindigkeit bestimmen. Die Höhe des Wechselsprungs kann durch ein Formelwerk in Abhängigkeit der Froude-Zahl berechnet werden. Der Versuch stützt diese Theorie zur Berechnung. Abweichungen werden diskutiert.

Bei den Versuchen mit verschiedenen Versuchsmodulen werden Druckmessungen durchgeführt. Das System zum Messen von Drucken und zum Heizen/Kühlen der Versuchsflüssigkeit ist in Fig. 3 dargestellt. Die Hauptkomponenten sind oben erläutert.

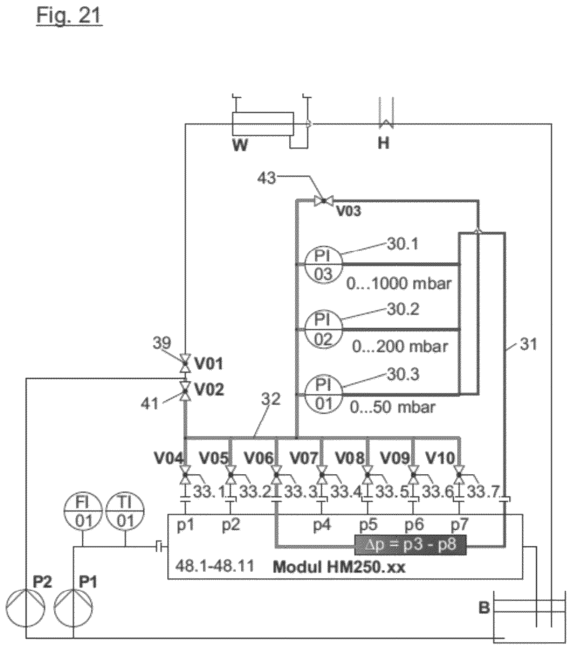

In der Fig. 21 ist dasselbe System bei der Druckmessung gezeigt. Die Leitungen, in denen der Druck bei der Messung ansteht, sind hierbei farblich hervorgehoben. Gemessen wird immer ein Differenzdruck, wobei der jeweils niedrigere Druck bei P8 ansteht. Im Beispiel wird der Druck bei P3 gegen P8 gemessen. Hierfür ist das Magnetventil 33.3 geöffnet und die übrigen Magnetventile 33.1, 33.2 und 33.4 bis 33.7 sowie die Schaltventile 39, 41 und 43 sind geschlossen.

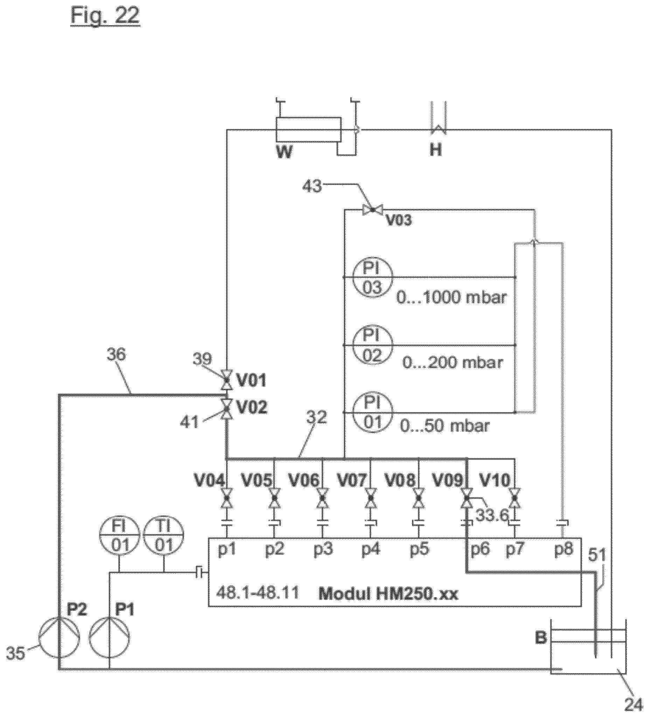

Fig. 22 veranschaulicht das Entlüften der Druckanschlüsse. Die durchströmten Leitungen sind hierbei farblich hervorgehoben. Im Beispiel ist der Druckanschluss $p_6$ belüftet. Hierfür ist das Magnetventil 33.6 freigeschaltet und die übrigen Magnetventile 33.1 bis 33.5 und 33.7 sind geschlossen. Ferner ist das Ventil 41 geöffnet und die Ventile 39 und 43 sind geschlossen. Die zweite Pumpe 35 pumpt Wasser durch die offenen Ventile 41 und 33.6 sowie ein angeschlossenes Modul 48 hindurch und nimmt Luft in den Leitungen 36 und 32 mit. Aus dem Modul 48 gelangt das Wasser in den Vorratsbehälter 24 zurück.

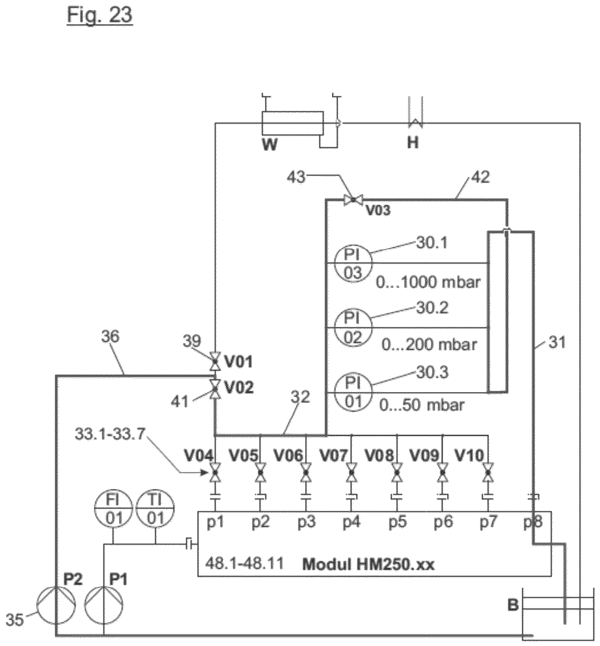

Fig. 23 veranschaulicht das Entlüften der Druckaufnehmer. Auch in Fig. 23 sind die durchströmten Leitungen farblich hervorgehoben. Hierfür sind die Schaltventile 41 und 43 geöffnet und das Schaltventil 39 sowie die Magnetventile 33.1 bis 33.7 geschlossen. Über das Schaltventil 43 wird die Leitung 42 zwischen der Druckseite $p_1$ bis $p_7$ und der Seite mit dem niedrigeren Druck $p_8$ kurzgeschlossen. Das Wasser strömt durch die Leitungen 36, 32, 42, 31 und nimmt die Luft in den Leitungen und Druckaufnehmern 30.1 bis 30.3 mit.

Auf beiden Seiten der Druckaufnehmer 30.1 bis 30.3 wird das Wasser von unten nach oben geführt, um die Kammern der Druckaufnehmer zuverlässig zu entlüften.

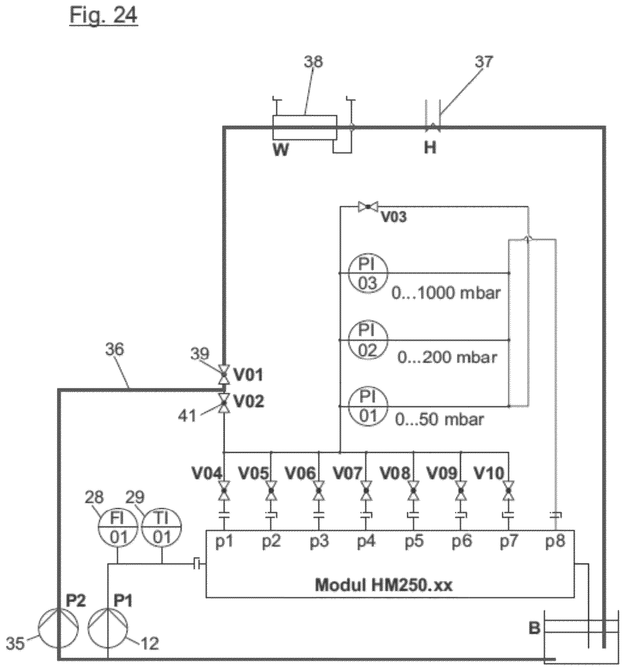

Fig. 24 zeigt das System beim Heizen/Kühlen des Wassers. Auch in Fig. 24 sind die durchströmten Leitungen farblich hervorgehoben. Das erste Schaltventil 39 ist geöffnet und das zweite Schaltventil 41 geschlossen. Die zweite Pumpe 35 pumpt das Wasser aus dem Vorratsbehälter 24 durch Leitung 36 und die Heizeinrichtung 37 und die Kühleinrichtung 38 hindurch. Hierbei wird das Wasser erwärmt oder abgekühlt und gelangt durch die Leitung 36 in den Vorratsbehälter 24 zurück.

Die Temperatur wird bei laufender erster Pumpe 12 geregelt, um ein Messen der Temperatur über den Temperatur-Messaufnehmer 29 zu gewährleisten

Bezugszeichenliste

| | |
|---|---|
| 1 | Vorrichtung |
| 2 | Tischgehäuse |
| 3 | Unterteil |
| 4 | Schaltschrank |
| 5 | obere Gehäusewand |
| 6 | Stellfläche |
| 7 | erste Öffnung |
| 8 | Innenstufe |
| 9 | Griffe |
| 10 | vordere Gehäusewand |
| 11 | erster Anschluss |
| 12 | erste Pumpe |
| 14.1 bis 14.7 | erster Druckanschluss |
| 15 | erster Referenzdruckanschluss |
| 16 | Touchpanel |
| 17 | USB-Buchse |
| 18 | mehrpolige Buchse |
| 19 | erster Messsignalanschluss |
| 20 | erster Stromanschluss |
| 21 | Ein-/Ausschalter |
| 22.1, 22.2 | Kühlmittelanschluss |
| 23 | Rahmenleiste |
| 24 | Vorratsbehälter |
| 25 | offenporiger Schaum |
| 26 | feinporiger Schaum |
| 27 | erste Leitung |
| 28 | Volumenstrom-Messaufnehmer |
| 29 | Temperatur-Messaufnehmer |
| 30.1 bis 30.3 | Druckaufnehmer |
| 31 | zweite Leitung |
| 32 | dritte Leitung |
| 33.1 bis 33.7 | Magnetventil |
| 34 | erster Ventilblock |
| 35 | zweite Pumpe |
| 36 | Zirkulationsleitung |
| 37 | Heizeinrichtung |
| 38 | Kühleinrichtung |
| 39 | erstes Schaltventil |
| 40 | erste Verbindungsleitung |
| 41 | zweites Schaltventil |
| 42 | zweite Verbindungsleitung |
| 43 | drittes Schaltventil |
| 44 | zweiter Ventilblock |
| 45 | Computer |
| 46 | Netzteil |
| 47 | Lesegerät |

| | |
|---|---|
| 48, 48.1 bis 48.11 | Versuchsmodul |
| 49 | Basisplatte |
| 50, 50.1 bis 50.6 | zweiter Anschluss |
| 51 | erster Auslass |
| 52 | zweiter Auslass |
| 53, 53.1 bis 53.7 | zweiter Druckanschluss |
| 54, 54.1 bis 54.6 | zweiter Referenzdruckanschluss |
| 55, 55.1, 55.2 | zweiter Messsignalanschluss |
| 56 | RFID |
| 57, 57.1 bis 57.7 | Rohr |
| 58 | Einrichtung zum Einspeisen |
| 59, 59.1 bis 59.7 | erstes Rohrende |
| 60 | Behälter |
| 61 | Stange |
| 61.1 | Dosierventil |
| 62 | Einspeiseleitung |
| 63, 63.1 bis 63.7 | zweites Rohrende |
| 64 | Rohrkrümmer |
| 65, 65.1, 65.2, 65.3 | Bohrung |
| 66 | Düse |
| 67 | Einlauf |
| 68 | Sammelbehälter |
| 69 | Verlagerungseinrichtung |
| 70 | Messuhr |
| 71 | Kanüle |
| 72, 72.1 bis 72.3 | zweiter Druckanschluss |
| 73 | zweiter Referenzdruckanschluss |
| 74.1-74.2 | Buchse |
| 74.3-74.7 | Kabeldurchführung |
| 76 | vertikaler Strömungskanal |
| 77 | Frontplatte |
| 78, 78.1, 78.2 | Auslassleitung |
| 79.1, 79.2 | Führungsschiene |
| 80.1, 80.2 | Versuchskörper |
| 81 | erste Elektrode |
| 82.1, 82.21 | Stift |
| 83 | Rückwand |
| 84 | zweite Elektrode |
| 85.1, 85.2 | Schraube |
| 86.1, 86.2 | zweiter Stromanschluss |
| 87 | Ablassventil |
| 88 | Klemmhalter |
| 89 | Reinigungsschieber |
| 90 | Stiel |
| 91 | Reinigungskopf |
| 92 | Gummikappe |
| 93 | Handgriff |
| 94 | erster Rohrabschnitt |
| 95 | Übergangsabschnitt |
| 96 | zweiter Rohrabschnitt |
| 97 | erstes Flügelrad |
| 98 | zweites Flügelrad |
| 99 | erste Abtasteinrichtung |
| 100 | zweite Abtasteinrichtung |
| 101 | zweite Öffnung |
| 102 | Auffangzylinder |

| | |
|---|---|
| 103 | Hebelarm |
| 104 | Träger |
| 105 | Hebel |
| 106 | Prallelement |
| 107 | Kraftmesseinrichtung |
| 108 | Widerlager |
| 109 | Röhrchen |
| 112 | Halter |
| 113 | Buchse |
| 115 | Zylinder |
| 116 | Ausströmöffnung |
| 117 | Öffnungselement |
| 118 | Schacht |
| 119 | vordere Wand |
| 120 | Längenmesseinrichtung |
| 121 | Halter |
| 122 | Nutenpaar |
| 123 | Becken |
| 124 | Venturi-Düse |
| 125 | Abdichtelement |
| 126 | Drucklanze |
| 127 | Eintrittsöffnung |
| 128 | Verteilerblock |
| 129.1 bis 129.7 | Handhahn |
| 130 | Abflussblock |
| 131.1 bis 131.4 | Rohrbündel |
| 132 | erster Lagerblock |
| 133 | zweiter Lagerblock |
| 134.1 bis 134.6 | erstes Entlüftungsventil |
| 135 | dritter Lagerblock |
| 136.1 bis 136.6 | zweiter Entlüftungsventil |
| 137 | vierter Lagerblock |
| 137.1 | drittes Entlüftungsventil |
| 138 | hintere Spritzschutzwand |
| 139.1, 139.2 | seitliche Spritzschutzwand |
| 140 | Rinne |
| 141 | Schelle |
| 142 | Rändelschraube |
| 143 | Strömungskanal |
| 144 | erster Schacht |
| 145 | zweier Schacht |
| 146 | Schlitzdüse |
| 147 | erste Platte |
| 148 | zweite Platte |
| 149 | Bodenwand |
| 150 | Einbauten |
| 151 | Regal |
| 152 | Regalrahmen |
| 153 | Rolle |
| 154 | Regalboden |

**Patentansprüche**

1. Vorrichtung zur Durchführung von strömungsmechanischen Versuchen umfassend

   - ein Tischgehäuse (2) mit einer horizontalen oberen Gehäusewand (5) mit einer Stellfläche (6) an der Oberseite und einer darin ausgebildeten ersten Öffnung (7) zum Aufsetzen eines Versuchsmoduls (48) mit einer Basisplatte (49) und einer darauf angeordneten Versuchsanordnung für strömungsmechanische Versuche,
   - einen von außen zugänglichen ersten Anschluss (11) für einen Schlauch an einer Gehäusewand (10), so dass der erste Anschluss mittels eines ersten Schlauches mit einem zweiten Anschluss (50) des Versuchsmoduls (48) zum Einspeisen von Versuchsflüssigkeit in die Versuchsanordnung verbindbar ist, wenn das Versuchsmodul (48) auf die Stellfläche (6) aufgesetzt ist,
   - einen im Tischgehäuse (2) angeordneten, wannenförmigen Vorratsbehälter (24) für Versuchsflüssigkeit, der durch die erste Öffnung (7) in der Stellfläche (6) hindurch direkt von oben zugänglich ist, so dass Versuchsflüssigkeit aus der Versuchsanordnung durch einen ersten Auslass (51) der Versuchsanordnung an der Unterseite der Basisplatte (49) hindurch in den Vorratsbehälter (24) auslassbar ist, wenn das Versuchsmodul (48) auf die Stellfläche (6) aufgesetzt ist,
   - eine im Tischgehäuse (2) angeordnete erste Pumpe (12), die eingangsseitig mit dem Innenraum des Vorratsbehälters (24) und ausgangsseitig mit dem ersten Anschluss (11) verbunden ist,
   - einen im Tischgehäuse (2) angeordneten und mit der ersten Pumpe (12) gekoppelten Elektromotor und
   - eine im Tischgehäuse (2) angeordnete und mit dem Elektromotor verbundene elektrische Steuerungseinrichtung (45), die ausgebildet ist, die Drehzahl der ersten Pumpe (12) einzustellen.

2. Vorrichtung nach Anspruch 1, bei der am inneren Rand der ersten Öffnung (7) eine bezüglich der Stellfläche (6) nach unten versetzte Innenstufe (8) zur Auflage des äußeren Randes der Basisplatte (49) umläuft.

3. Vorrichtung nach Anspruch 1 oder 2, bei der im Innenraum des Vorratsbehälters (24) mindestens eine Lage aus einem offenporigen Schaum (25, 26) angeordnet ist.

4. Vorrichtung nach Anspruch 3, bei der im Innenraum eine erste Lage aus einem ersten offenporigen Schaum (25) und darauf eine zweite Lage aus einem zweiten offenporigen Schaum (26) angeordnet ist, wobei die zweite Lage dünner als die erste Lage und der zweite offenporige Schaum feinporiger als der erste offenporige Schaum ist.

**5.** Vorrichtung nach einem der Ansprüche 1 bis 4, bei der in einer ersten Leitung (27) zwischen der ersten Pumpe (12) und dem ersten Anschluss (11) ein Volumenstrom-Messaufnehmer (28), vorzugsweise ein magnetisch induktiver Messaufnehmer, zum Messen des Volumenstroms der Versuchsflüssigkeit angeordnet ist.

**6.** Vorrichtung nach einem der Ansprüche 1 bis 5, bei der an einer Gehäusewand (10) des Tischgehäuses (2) ein erster Referenzdruckanschluss (15) und mindestens ein erster Druckanschluss (14.1 bis 14.7) von außen zugänglich angeordnet ist und im Tischgehäuse (2) mindestens ein Druckaufnehmer (30.1 bis 30.3) für die Messung eines Differenzdruckes angeordnet ist, der über eine zweite Leitung (31) mit dem ersten Referenzdruckanschluss (15) und über eine dritte Leitung (32) mit dem ersten Druckanschluss (14.1 bis 14.7) verbunden ist, so dass der erste Referenzdruckanschluss (15) über einen zweiten Schlauch mit einem zweiten Referenzdruckanschluss (54) einer Versuchsanordnung und der erste Druckanschluss (14.1 bis 14.7) über einen dritten Schlauch mit einem zweiten Druckanschluss (53) der Versuchsanordnung verbindbar ist, wenn das Versuchsmodul (48) auf die Stellfläche (6) aufgesetzt ist.

**7.** Vorrichtung nach Anspruch 6, bei der der Druckaufnehmer (30.1 bis 30.3) über Magnetventile (33.1 bis 33.7) mit verschiedenen ersten Druckanschlüssen (14.1 bis 14.7) verbunden ist.

**8.** Vorrichtung nach Anspruch 6 oder 7, die mehrere parallelgeschaltete Druckaufnehmer (30.1 bis 30.3) mit unterschiedlichen Messbereichen umfasst.

**9.** Vorrichtung nach einem der Ansprüche 1 bis 8, bei der im Tischgehäuse (2) ein Temperatur-Messaufnehmer (29) angeordnet ist, der in die erste Leitung (27) zwischen der ersten Pumpe (12) und dem ersten Anschluss (11) oder in den Innenraum des Vorratsbehälters (24) eingreift, um die Temperatur der Versuchsflüssigkeit zu messen.

**10.** Vorrichtung nach einem der Ansprüche 1 bis 9, bei der im Tischgehäuse (2) eine Heizeinrichtung (37) und/oder eine Kühleinrichtung (38) angeordnet ist, die in einer Zirkulationsleitung(36) mit einer darin angeordneten zweiten Pumpe (35) und/oder in den Vorratsbehälter (24) integriert ist, um die Versuchsflüssigkeit zu heizen und/oder zu kühlen.

**11.** Vorrichtung nach Anspruch 10, bei der die Heizeinrichtung (37) eine elektrische Widerstandsheizung ist und/oder bei der die Kühleinrichtung (38) ein Wärmetauscher ist, der mit an einer Gehäusewand angeordneten Kühlmittelanschlüssen (21.1, 21.2) verbunden ist, die von außen zugänglich sind, um diesen mittels eines vierten und eines fünften Schlauches mit einem Kaltwassersatz oder einer anderen Kühlmittelquelle zu verbinden.

**12.** Vorrichtung nach einem der Ansprüche 1 bis 11, die eine Einrichtung zum Entlüften der Einrichtungen zum Messen des Differenzdruckes (30.1 bis 30.3) umfasst, die die Zirkulationsleitung (36) und die darin angeordnete zweite Pumpe (35) sowie Magnetventile (33.1 bis 33.7) umfasst, mittels derer die Versuchsflüssigkeit wahlweise durch eine zweite Leitung (31) zwischen dem Druckaufnehmer (30.1 bis 30.3) und dem ersten Referenzdruckanschluss (15) und einen daran angeschlossenen zweiten Schlauch sowie die damit über den zweiten Referenzdruckanschluss (54) verbundene Versuchsanordnung eines auf die Stellfläche (6) aufgesetzten Versuchsmoduls (48) und von dort in den Versuchsbehälter (24) zurückgepumpt werden kann oder durch eine dritte Leitung (32) zwischen dem Druckaufnehmer (30.1 bis 30.3) und dem ersten Druckanschluss (14.1 bis 14.7) und einen daran angeschlossenen dritten Schlauch sowie die damit über den zweiten Druckanschluss (53) verbundene Versuchsanordnung in den Vorratsbehälter (24) zurückgepumpt werden kann.

**13.** Vorrichtung nach einem der Ansprüche 1 bis 12, bei der die erste Pumpe (12) eine Kreiselpumpe ist und/oder bei der die erste Pumpe (12) eine Tauchpumpe ist und/oder bei der die zweite Pumpe (35) eine Kreiselpumpe ist und/oder bei der die zweite Pumpe (35) eine Tauchpumpe ist.

**14.** Vorrichtung nach einem der Ansprüche 1 bis 13, die einen Computer (45) und ein damit verbundenes, in einer Wand des Tischgehäuses (2) angeordnetes, von außen zugängliches Touchpanel (16) umfasst, wobei der Computer (45) ausgebildet ist, Informationen über die Vorrichtung (1) und/oder das Versuchsmodul (48) und/oder die Lerninhalte und/oder die Versuchseinrichtung und/oder die Versuchsdurchführung und/oder Messergebnisse und/oder Auswertungen von Messergebnissen auf dem Touchpanel (16) anzuzeigen und/oder in Abhängigkeit von Eingaben über das Touchpanel (16) das Entlüften der Einrichtungen zum Messen des Differenzdruckes (30.1 bis 30.3) und/oder die Durchführung von Versuchen und/oder die Erfassung von Messergebnissen und/oder die Auswertung von Messergebnissen zu steuern.

**15.** Vorrichtung nach Anspruch 14, bei dem der Computer (45) internetfähig ist und/oder die einen WLAN-Accesspoint umfasst, der mit dem Computer vernetzt ist.

**16.** Vorrichtung nach einem der Ansprüche 1 bis 15, die ein mit dem Computer (45) verbundenes Lesegerät (47) für einen RFID (56) umfasst, das ausgebildet ist, eine auf einem RFID (56) eines Versuchsmoduls (48) gespeicherte Kennung auszulesen, wenn dieses auf die Stellfläche aufgesetzt ist, wobei der Computer (45) ausgebildet ist, in Abhängigkeit von der vom RFID (56) ausgelesenen Kennung den Programmablauf zu steuern

**17.** Vorrichtung nach einem der Ansprüche 1 bis 16, bei der das Tischgehäuse (2) an einer Gehäusewand (10) mindestens einen ersten Messsignalanschluss (19) aufweist, der mit dem Computer (45) verbunden, von außen zugänglich und über ein erstes elektrisches Kabel über einen zweiten elektrischen Messsignalanschluss mit einem elektrischen Messaufnehmer (99, 100, 107) auf einem Versuchsmodul (48) verbindbar ist, wenn dieses auf die Stellfläche (6) aufgesetzt ist.

**18.** Vorrichtung nach einem der Ansprüche 1 bis 17, bei der das Tischgehäuse (2) ein Unterteil (3) mit der Stellfläche (6) an der Oberseite und einen am hinteren Rand des Unterteiles (3) nach oben vorstehenden Schaltschrank (4) umfasst, wobei im Unterteil (3) der Vorratsbehälter (24), die erste Pumpe (12) und gegebenenfalls die zweite Pumpe (35) und im Schaltschrank (4) die Steuerungseinrichtung und gegebenenfalls die Messaufnehmer (28, 29) und gegebenenfalls der Computer (45) und gegebenenfalls der Touchscreen (16) angeordnet sind.

**19.** Vorrichtung nach Anspruch 18, bei der der erste Anschluss (11) und gegebenenfalls der erste Referenzdruckanschluss (15) und der erste Druckanschluss (14.1 bis 14.7) und gegebenenfalls ein von außen zugänglicher erster Messsignalanschluss (19) für einen externen elektrischen Messaufnehmer (20) und gegebenenfalls von außen zugängliche erste elektrische Stromanschlüsse für einen externen Verbraucher und gegebenenfalls des Touchpanels (16) in einer vorderen Gehäusewand (10) des Schaltschrankes (4) angeordnet ist, die der Stellfläche (6) zugewandt ist.

**20.** Vorrichtung nach einem der Ansprüche 1 bis 19, bei der das Tischgehäuse (2) Griffe (9) zum Tragen des Tischgehäuses umfasst.

**21.** Versuchsmodul für die Durchführung von strömungsmechanischen Versuchen umfassend

   • eine Basisplatte (49) zum Aufsetzen auf eine Stellfläche (6) und Abdecken einer darin ausgebildeten ersten Öffnung (7) zu einem Vorratsbehälter (24) einer Vorrichtung gemäß Anspruch 1,
   • eine auf der Basisplatte (49) angeordnete Versuchsanordnung für strömungsmechanische Versuche,
   • einen zweiten Anschluss (50) für die Einspeisung von Versuchsflüssigkeit mittels eines ersten Schlauches in die Versuchsanordnung,
   • einen ersten Auslass (51) für Versuchsflüssigkeit an der Unterseite der Basisplatte (49), der über eine Einrichtung zum Leiten von Versuchsflüssigkeit mit der Versuchsanordnung verbunden ist,
   • und/oder einen zweiten Auslass (52) für Versuchsflüssigkeit oberhalb der Basisplatte (49) zum Verbinden mit einer Abflussleitung, und
   ◦ eine der nachfolgenden Versuchsanordnungen:

      ◦ ein auf der Basisplatte gehaltenes, horizontales Rohr (57) aus einem durchsichtigen Material, eine Einrichtung zum Einspeisen (58) einer Markierungsflüssigkeit zwischen einem ersten Rohrende (59) des Rohrs (57) und dem zweiten Anschluss (50), einen oberhalb der Einrichtung zum Einspeisen (58) gehaltenen Behälter (60) für Markierungsflüssigkeit, ein in einer Einspeiseleitung (62) zwischen dem Behälter (60) und der Einrichtung zum Einspeisen (58) angeordnetes Dosierventil (61.1), einen mit einem zweiten Rohrende (63) des Rohrs (57) verbundenen Rohrkrümmer (64) aus einem durchsichtigen Material mit einem zweiten Auslass (52) am anderen Ende zum Verbinden mit einer Abflussleitung oder zum Verbinden mit einer Auslassleitung zu einem ersten Auslass (51) in einer Bohrung (65) der Basisplatte (49);
      ◦ mindestens ein auf der Basisplatte gehaltenes, horizontales Rohr (57), das an einem ersten Rohrende (59) über eine Düse (66) oder einen scharfkantigen Einlauf (67) mit dem zweiten Anschluss (50) verbunden ist und dessen zweites Rohrende (63) über einen Sammelbehälter (68) für Versuchsflüssigkeit mit dem ersten Auslass (51) verbunden ist, wobei in dem Sammelbehälter (68) mittels einer Verlagerungseinrichtung (69) eine in das Rohr (57) eingreifende Kanüle (71) quer zum Rohrquerschnitt verlagerbar ist und die Kanüle (71) mit einem zweiten Druckanschluss (53) verbunden ist;
      ◦ ein auf der Basisplatte gehaltener vertikaler Strömungskanal (76) mit einer durchsichtigen Frontplatte (77), der unten mit dem zweiten Anschluss (50) und oben über mindestens eine Auslassleitung (78.1, 78.2) mit dem ersten Auslass (51) verbunden ist, in dem mindestens ein Versuchskörper (80.1, 80.2) angeordnet oder anordenbar ist, in dem unterhalb des Versuchskörpers (80.1, 80.2) eine den Querschnitt des Strömungskanals (76) zumindest teilweise überspannende erste Elektrode (81) und in dem eine zweite Elektrode (84) angeordnet ist, wobei die erste Elektrode (81) und die zweite Elektrode (84) mit zweiten elektrischen Stromanschlüssen (86.1, 86.2) zum Anschluss einer elektrischen Spannungsquelle verbunden sind (HM 250.03);

◦ ein auf der Basisplatte gehaltenes Rohr (57) aus einem durchsichtigen Material, das an einem ersten Rohrende (59) den zweiten Anschluss (50) aufweist, daran angrenzend einen ersten Rohrabschnitt (94) mit einem größeren Durchmesser, daran angrenzend einen konischen oder mit einer anderen Form sich verjüngenden Übergangsabschnitt (95) und daran angrenzend einen zweiten Rohrabschnitt (96) mit einem kleineren Durchmesser aufweist und am anderen Ende über eine Auslassleitung (78) mit dem ersten Auslass (51) verbunden ist, wobei in dem ersten Rohrabschnitt (94) ein erstes Flügelrad (97) und in dem zweiten Rohrabschnitt (96) ein zweites Flügelrad (98) angeordnet ist, neben dem ersten Rohrabschnitt (94) eine erste Abtasteinrichtung (99) zum Abtasten der Drehgeschwindigkeit des ersten Flügelrades (97), neben dem zweiten Rohrabschnitt (96) eine zweite Abtasteinrichtung (100) zum Abtasten der Drehgeschwindigkeit des zweiten Flügelrades (98) angeordnet ist und die ersten und zweiten Abtasteinrichtungen (99, 100) mit zweiten Messsignalanschlüssen (55) verbunden sind;

◦ ein auf den Rand des als zweite Öffnung (101) der Basisplatte (49) ausgebildeten ersten Auslasses (51) aufgesetzter, oben geschlossener und durchsichtiger Auffangzylinder (102) mit vertikaler Achse, eine mit dem zweiten Anschluss verbundene, oberhalb der ersten Öffnung im Auffangzylinder (102) vertikal nach oben gerichtete Düse (66), ein vertikal oberhalb der Düse (66) an einem Arm (103.1) eines schwenkbar an einem Träger (104) gelagerten Hebels (105) gehaltenes Prallelement (106), ein einerseits an einen Widerlager (108) und andererseits an dem anderen Arm (103.2) des Hebels (105) abgestützte Kraftmesseinrichtung (107), wobei der Eingang der Düse (66) mit dem zweiten Druckanschluss (53) verbunden ist und die Kraftmesseinrichtung (107) mit dem zweiten Messsignalanschluss (55) verbunden ist;

◦ ein auf der Basisplatte (49) mit vertikaler Achse angeordneter, durchsichtiger Zylinder (115) mit dem zweiten Anschluss (50) am unteren Ende und einer darüber angeordneten Ausströmöffnung (116) an der Seite, an der austauschbar verschiedene Öffnungselemente (117) befestigbar sind, ein seitlich neben dem Zylinder (115) angeordneter, und zur Ausströmöffnung (116) hin geöffneter, oben offener Schacht (118) mit einer zumindest transparenten vorderen Wand (119), der unten zu dem als zweite Öffnung (101) in der Basisplatte (49) ausgebildeten ersten Auslass (51) hin geöffnet ist, wobei der Schacht (118) oben oberhalb der Ausströmöffnung (116) geöffnet ist und eine auf den oberen Rand des Schachtes (118) aufgesetzte Längenmesseinrichtung (120) vorhanden ist, die zum Messen des Abstandes eines aus der Ausströmöffnung (116) austretenden Versuchsflüssigkeitsstrahles vom oberen Rand des Schachtes (118) in verschiedenen Abständen von der Ausströmöffnung (116) positionierbar ist, wobei an dem Zylinder (115) unten der zweite Druckanschluss (53) und an einem Becken (123) auf der Basisplatte (49) der zweite Druckanschluss (53) angeordnet ist;

◦ eine oberhalb der Basisplatte (49) gehaltene horizontale Venturi-Düse (124) aus einem transparenten Material, die an einem Ende mit dem zweiten Anschluss (50) verbunden ist und am anderen Ende über eine Auslassleitung (78) mit dem ersten Auslass (51) der Basisplatte (49) verbunden ist, wobei an verschiedenen Stellen von Düse und Diffusor der Venturi-Düse (124) Druckmessbohrungen vorhanden sind, die mit von der Außenseite der Venturi-Düse vorstehenden zweiten Druck- und zweiten Referenzdruckanschlüssen (53.1 bis 53.7, 54) verbunden sind, wobei von dem anderen Ende durch ein Abdichtelement (125) hindurch eine Drucklanze (126) in die Venturi-Düse (124) hinein und mit der Eintrittsöffnung (127) an verschiedenen axialen Positionen in der Venturi-Düse (124) positionierbar ist und die Drucklanze (126) am anderen Ende mit einem zweiten Druckanschluss (53.7) verbunden ist;

◦ mehrere horizontale, gleich lange Rohre (57.1 bis 57.7) mit verschiedenen Einbauten, die parallel nebeneinander auf der Basisplatte (49) gehalten sind, die vorzugsweise ausgewählt sind aus einem Rohr mit großem Innendurchmesser und eingebauter Düse, einem Rohr mit großem Innendurchmesser und eingebauter Blende, einem Rohr mit kleinem Innendurchmesser und eingebauter Düse, einem Rohr mit kleinem Innendurchmesser, S-Krümmung und eingebauter Düse, einem Rohr mit kleinem Innendurchmesser, scharfkantiger S-Krümmung und eingebauter Düse, einem Rohr mit kleinem Innendurchmesser, Doppel-S-Krümmung und eingebauter Düse und einem Rohr mit kleinem Innendurchmesser, eingebautem Ventil und eingebauter Düse, wobei der kleine Innendurchmesser ein kleinerer Innendurchmesser als der große Innendurchmesser ist, wobei die Rohre (57.1 bis 57.7) an ersten Rohrenden mit einem Verteilerblock (128) verbunden sind, der den zweiten Anschluss (50) und einen zweiten Druckanschluss (53) aufweist, und die Rohre (57.1 bis 57.7) an über Handhähne (129.1 bis 129.7) mit einem Abflussblock (130) verbunden sind, der einen zweiten Referenzdruckanschluss (54) aufweist und über eine Auslassleitung (78) mit dem ersten Auslass (51) in der Basisplatte (49) verbunden ist;

∘ auf der Basisplatte (49) nebeneinander gehaltene horizontale Rohre (57.1, 57.2) und Rohrbündel (131.1 bis 131.4) mit unterschiedlichen Innendurchmessern, die an ersten Rohrenden jeweils den zweiten Anschluss (50.1 bis 50.4) aufweisen und deren an zweite Rohrenden jeweils oberhalb einer quer zu den Rohren erstreckten, den Auslass (51) bildenden zweiten Öffnung (101) in der Basisplatte (49) münden, die an dem von den Rohren und Rohrbündeln entfernten Rand und an zu den Rohren und Rohrbündeln parallelen Rändern durch von der Basisplatte (49) hochstehende Spritzschutzwände (138, 139.1, 139.2) eingefasst ist, wobei die Rohre (57.1, 57.2) und Rohrbündel (131.1 bis 131.4) jeweils in einem Abstand von dem zweiten Anschluss (50.1 bis 50.6) einen zweiten Druckanschluss (53.1 bis 53.6) und ein erstes Entlüftungsventil (134.1 bis 134.6) und in einem weiteren Abstand von dem zweiten Anschluss einen zweiten Referenzdruckanschluss (54.1 bis 54.6) und ein zweites Entlüftungsventil (136.1 bis 136.6) aufweisen und gegebenenfalls ein Rohrbündel in einem weniger weit von dem zweiten Anschluss entfernten Abstand einen zweiten Druckanschluss (53.7) und ein drittes Entlüftungsventil (137) aufweist;

∘ auf der Basisplatte (49) nebeneinander gehaltene horizontale Rohre (57.1 bis 57.4) umfassend ein hydraulisch glattes Rohr (57.1), ein hydraulisch raues Rohr (57.2) und ein rechteckiges Rohr (57.3), die an einem ersten Rohrende jeweils einen zweiten Anschluss (50.1 bis 50.4), in einem Abstand davon einen zweiten Druckanschluss (53.1 bis 53.3) und in einem weiteren Abstand davon einen zweiten Referenzdruckanschluss (54.1 bis 54.3) aufweisen, und ein Rohr (57.4) mit mehr als drei Druckmessbohrungen entlang einer Einlaufstrecke, von denen die beiden äußeren mit einem zweiten Referenzdruckanschluss (54.1, 54.2) und die anderen jeweils mit einem zweiten Druckanschluss 53.1 bis 53.7) verbunden sind, wobei sämtliche Rohre am ersten Rohrende einen zweiten Anschluss aufweisen und nur das Rohr (57.4) mit den mehr als drei Druckmessbohrungen auch am zweiten Rohrende einen zweiten Anschluss (50.4) aufweist und die zweiten Rohrenden sämtlicher Rohre (57.1 bis 57.4) über einer quer zu den Rohren erstreckten, den ersten Auslass (51) bildenden zweiten Öffnung (101) in der Basisplatte (49) münden, die an dem von den Rohren (57.1 bis 57.4) entfernten Rand und an den zu den Rohren parallelen Seitenrändern durch von der Basisplatte (49) hochstehende Spritzschutzwände (138, 139.1, 139.2) eingefasst ist;

∘ ein horizontaler Strömungskanal (143) auf der Basisplatte (49) mit zumindest einer vorderen Wand (119) aus einem transparenten Material, einem zweiten Anschluss (50) an dem einen Ende des Strömungskanals (143) und einer Verbindung zu dem ersten Auslass (51) an dem anderen Ende (des Strömungskanals (143), mehreren in den Strömungskanal (143) einsetzbaren und darin mittels Magneten fixierbaren Einbauten (150) und einer fest montierbaren Schlitzdüse (146) zur Demonstration von Energiehöhen und Verlusten sowie der Ermittlung von Durchflüssen bei der Durchströmung des Strömungskanals (143).

22. Versuchsmodul nach Anspruch 21 umfassend einen zweiten Referenzdruckanschluss (54) und mindestens einen zweiten Druckanschluss (53), die mit der Versuchsanordnung verbunden sind, und/oder mindestens einen zweiten Messsignalanschluss (55), der mit einem elektrischen Messaufnehmer (99, 100, 107) im Versuchsaufbau verbunden ist, und/oder zweite elektrische Stromanschlüsse (86.1, 86.2) für die Verbindung mit einer elektrischen Spannungsquelle, die mit einem elektrischen Verbraucher auf der Basisplatte (49) verbunden sind.

**23.** Versuchsmodul nach Anspruch 21 oder 22, das einen RFID (56) umfasst, auf dem eine auslesbare Kennung mit einer Identifikation des Versuchsmoduls (48) gespeichert ist.

**24.** System zur Durchführung von strömungsmechanischen Versuchen umfassend eine Vorrichtung (1) gemäß einem der Ansprüche 1 bis 20 und mindestens ein Versuchsmodul (48.1 bis 48.11) für die Durchführung von strömungsmechanischen Versuchen umfassend

• eine Basisplatte (49) zum Aufsetzen auf eine Stellfläche (6) und Abdecken einer darin ausgebildeten ersten Öffnung (7) zu einem Vorratsbehälter (24) einer Vorrichtung gemäß Anspruch 1,
• eine auf der Basisplatte (49) angeordnete Versuchsanordnung für strömungsmechanische Versuche,
• einen zweiten Anschluss (50) für die Einspeisung von Versuchsflüssigkeit mittels eines ersten Schlauches in die Versuchsanordnung,
• einen ersten Auslass (51) für Versuchsflüssigkeit an der Unterseite der Basisplatte (49), der über eine Einrichtung zum Leiten von Versuchsflüssigkeit mit der Versuchsanordnung verbunden ist,
• und/oder einen zweiten Auslass (52) für Versuchsflüssigkeit oberhalb der Basisplatte (49) zum Verbinden mit einer Abflussleitung.

**25.** System gemäß Anspruch 24 umfassend mindestens ein Versuchsmodul gemäß einem der Ansprüche 21 bis 23.

**26.** System gemäß Anspruch 24 oder 25 umfassend ein fahrbares Regal (151) mit mehreren Regalböden (154) zum Lagern der Vorrichtung (1) und von mehreren Versuchsmodulen (48.1 bis 48.11).

**Claims**

**1.** A device for performing flow assays, comprising

- a desktop enclosure (2) having a horizontal upper enclosure wall (5) with a placement surface (6) on the upper face and a first opening (7) which is configured therein for positioning a test module (48) having a base plate (49) and a test arrangement for flow assays arranged thereon,
- a first connection (11) which is accessible from the outside for connecting a hose to an enclosure wall (10) so that the first connection can be connected by means of a first hose to a second connection (50) of the test module (48) for supplying test fluid into the test arrangement when the test module (48) is positioned on the placement surface (6),
- a trough-shaped storage container (24) for test fluid, which is arranged in the desktop enclosure (2) and which is directly accessible from above through the first opening (7) in the placement surface (6) so that test fluid can be discharged from the test arrangement through a first outlet (51) of the test arrangement on the lower face of the base plate (49) into the storage container (24) when the test module (48) is positioned on the placement surface (6),
- a first pump (12) which is arranged in the desktop enclosure (2) and which is connected on the inlet side to the interior of the storage container (24) and on the outlet side to the first connection (11),
- an electric motor which is arranged in the desktop enclosure (2) and which is coupled to the first pump (12) and
- an electric control apparatus (45) which is arranged in the desktop enclosure (2) and which is connected to the electric motor, and which is configured to set the rotational speed of the first pump (12).

**2.** The device according to claim 1, wherein an inner step (8) which is offset downwardly relative to the placement surface (6) circulates around the inner edge of the first opening (7) for supporting the outer edge of the base plate (49).

**3.** The device according to claim 1 or 2, wherein at least one layer consisting of an open-pore foam (25, 26) is arranged in the interior of the storage container (24).

**4.** The device according to claim 3, wherein a first layer consisting of a first open-pore foam (25) is arranged in the interior and a second layer consisting of a second open-pore foam (26) is arranged thereon, wherein the second layer is thinner than the first layer and the second open-pore foam has finer pores than the first open-pore foam.

**5.** The device according to one of claims 1 to 4, wherein a volume flow measuring sensor (28), preferably a magnetically inductive measuring sensor, is arranged in a first line (27) between the first pump (12) and the first connection (11) for measuring the volume flow of the test fluid.

**6.** The device according to one of claims 1 to 5, wherein a first reference pressure connection (15) and at least one first pressure connection (14.1 to 14.7) are arranged on an enclosure wall (10) of the desktop enclosure (2) so as to be accessible from the outside, and at least one pressure sensor (30.1 to 30.3) for measuring a differential pressure is arranged in the desktop enclosure (2) and is connected via a second line (31) to the first reference pressure connection (15) and via a third line (32) to the first pressure connection (14.1 to 14.7), so that the first reference pressure connection (15) can be connected via a second hose to a second reference pressure connection (54) of a test arrangement and the first pressure connection (14.1 to 14.7) can be connected via a third hose to a second pressure connection (53) of the test arrangement when the test module (48) is positioned on the placement surface (6).

7. The device according to claim 6, wherein the pressure sensor (30.1 to 30.3) is connected via solenoid valves (33.1 to 33.7) to different first pressure connections (14.1 to 14.7).

8. The device according to claim 6 or 7, which comprises a plurality of pressure sensors (30.1 to 30.3) which are connected in parallel with different measuring ranges.

9. The device according to one of claims 1 to 8, wherein a temperature measuring sensor (29), which acts in the first line (27) between the first pump (12) and the first connection (11) or in the interior of the storage container (24), is arranged in the desktop enclosure (2) in order to measure the temperature of the test fluid.

10. The device according to one of claims 1 to 9, wherein a heating apparatus (37) and/or a cooling apparatus (38), which is integrated in a circulation line (36) with a second pump (35) arranged therein and/or in the storage container (24), is arranged in the desktop enclosure (2) in order to heat and/or to cool the test fluid.

11. The device according to claim 10, wherein the heating apparatus (37) is an electrical resistance heater and/or wherein the cooling apparatus (38) is a heat exchanger which is connected to coolant connections (21.1, 21.2) which are arranged on an enclosure wall and which are accessible from the outside in order to connect this heat exchanger by means of a fourth and a fifth hose to a cold water unit or another coolant source.

12. The device according to one of claims 1 to 11, which comprises an apparatus for venting the apparatuses for measuring the differential pressure (30.1 to 30.3), which apparatus comprises the circulation line (36) and the second pump (35), which is arranged therein, as well as solenoid valves (33.1 to 33.7), by means of which the test fluid can be selectively pumped back through a second line (31) between the pressure sensor (30.1 to 30.3) and the first reference pressure connection (15) and a second hose connected thereto, as well as the test arrangement of a test module (48) which is positioned on the placement surface (6), which test module is connected thereto via the second reference pressure connection (54), and therefrom into the test container (24), or can be pumped back into the storage container (24) through a third line (32) between the pressure sensor (30.1 to 30.3) and the first pressure connection (14.1 to 14.7) and a third hose connected thereto, as well as the test arrangement which is connected thereto via the second pressure connection (53).

13. The device according to one of claims 1 to 12, wherein the first pump (12) is a centrifugal pump and/or wherein the first pump (12) is a submersible pump and/or wherein the second pump (35) is a centrifugal pump and/or wherein the second pump (35) is a submersible pump.

14. The device according to one of claims 1 to 13, which comprises a computer (45) and a touch panel (16) which is connected thereto, which is arranged in a wall of the desktop enclosure (2) and which is accessible from the outside, wherein the computer (45) is configured to display information on the touch panel (16) about the device (1) and/or the test module (48) and/or the learning content and/or the test apparatus and/or the test execution and/or measurement results and/or evaluations of measurement results and/or to control the venting of the apparatuses for measuring the differential pressure (30.1 to 30.3) and/or the execution of tests and/or the detection of measurement results and/or the evaluation of measurement results as a function of inputs via the touch panel (16).

15. The device according to claim 14, wherein the computer (45) is internet-enabled and/or the device comprises a WLAN access point which is networked to the computer.

16. The device according to one of claims 1 to 15, which comprises a reading device (47) for an RFID (56) which is connected to the computer (45) and which is configured to read an identifier stored on an RFID (56) of a test module (48) when this test module is positioned on the placement surface, wherein the computer (45) is configured to control the program sequence as a function of the identifier read by the RFID (56).

17. The device according to one of claims 1 to 16, wherein the desktop enclosure (2) has on an enclosure wall (10) at least one first measurement signal connection (19) which is connected to the computer (45), which is accessible from the outside and which via a first electrical cable can be connected via a second electrical measurement signal connection to an electrical measuring sensor (99, 100, 107) on a test module (48) when this test module is positioned on the placement surface (6).

18. The device according to one of claims 1 to 17, wherein the desktop enclosure (2) comprises a lower part (3) with the placement surface (6) on the upper face and a control cabinet (4) protruding upwardly on the rear edge of the lower part (3), wherein the first pump (12) and optionally the second pump (35) are arranged in the lower part (3) of the storage container (24), and the control apparatus and optionally the measuring sensor (28, 29) and optionally the computer (45) and optionally the touch screen (16) are arranged in the control cabinet (4).

19. The device according to claim 18, wherein the first connection (11) and optionally the first reference pressure connection (15) and the first pressure connection (14.1 to 14.7) and optionally a first measurement signal connection (19), which is accessible from the outside, for an external electrical measuring sensor (20) and optionally first electrical power connections for an external consumer and optionally the touch panel (16), which are accessible from the outside, are arranged in a front enclosure wall (10) of the control cabinet (4) which faces the placement surface (6).

20. The device according to one of claims 1 to 19, wherein the desktop enclosure (2) comprises handles (9) for carrying the desktop enclosure.

21. A test module for performing flow assays, comprising

    • a base plate (49) for positioning on a placement surface (6) and covering a first opening (7), which is configured therein, relative to a storage container (24) of a device according to claim 1,
    • a test arrangement for flow assays arranged on the base plate (49),
    • a second connection (50) for supplying test fluid into the test arrangement by means of a first hose,
    • a first outlet (51) for test fluid on the lower face of the base plate (49), which first outlet is connected via an apparatus for conducting test fluid to the test arrangement,
    • and/or a second outlet (52) for test fluid above the base plate (49) for connecting to a drainage line, and
    ○ one of the following test arrangements:

        ○ a horizontal pipe (57) which consists of a transparent material and which is held on the base plate, a supply apparatus (58) for supplying a marking fluid between a first pipe end (59) of the pipe (57) and the second connection (50), a container (60) for marking fluid which is held above the supply apparatus (58), a metering valve (61.1) which is arranged in a supply line (62) between the container (60) and the supply apparatus (58), a pipe elbow (64) which consists of a transparent material and which is connected to a second pipe end (63) of the pipe (57), and with a second outlet (52) at the other end for connecting to a drainage line or for connecting by means of an outlet line to a first outlet (51) in a bore (65) of the base plate (49);

○ at least one horizontal pipe (57) which is held on the base plate and which is connected at a first pipe end (59) via a nozzle (66) or a sharp-edged inlet (67) to the second connection (50), the second pipe end (63) thereof being connected to the first outlet (51) via a collection container (68) for test fluid, wherein a cannular (71) engaging in the pipe (57) can be displaced transversely to the pipe cross section in the collection container (68) by means of a displacement apparatus (69) and the cannular (71) is connected to a second pressure connection (53);

○ a vertical flow channel (76) which has a transparent front plate (77) and which is held on the base plate, which vertical flow channel is connected at the bottom to the second connection (50) and at the top via at least one outlet line (78.1, 78.2) to the first outlet (51), in which at least one test body (80.1, 80.2) is arranged or can be arranged, in which a first electrode (81) at least partially spanning the cross section of the flow channel (76) is arranged below the test body (80.1, 80.2) and in which a second electrode (84) is arranged, wherein the first electrode (81) and the second electrode (84) are connected to second electrical power connections (86.1, 86.2) for connecting an electrical voltage source (HM 250.03);

○ a pipe (57) which consists of a transparent material and which is held on the base plate, which pipe has at a first pipe end (59) the second connection (50), adjoining thereto a first pipe portion (94) with a greater diameter, adjoining thereto a transition portion (95) which is conical or tapers with a different shape, and adjoining thereto a second pipe portion (96) with a smaller diameter, and which is connected to the first outlet (51) at the other end via an outlet line (78), wherein a first impeller (97) is arranged in the first pipe portion (94) and a second impeller (98) is arranged in the second pipe portion (96), a first scanning apparatus (99) is arranged adjacent to the first pipe portion (94) for scanning the rotational speed of the first impeller (97), a second scanning apparatus (100) is arranged adjacent to the second pipe portion (96) for scanning the rotational speed of the second impeller (98), and the first and second scanning apparatuses (99, 100) are connected to second measurement signal connections (55);

∘ a collection cylinder (102) which has a vertical axis, which is closed at the top and transparent and which is positioned on the edge of the first outlet (51) which is configured as the second opening (101) of the base plate (49), a nozzle (66) which is connected to the second connection and which is oriented vertically upwardly above the first opening in the collection cylinder (102), a baffle element (106) which is held vertically above the nozzle (66) on an arm (103.1) of a lever (105) which is pivotably mounted on a support (104), a force measuring apparatus (107) which is supported, on the one hand, on an abutment (108) and, on the other hand, on the other arm (103.2) of the lever (105), wherein the inlet of the nozzle (66) is connected to the second pressure connection (53) and the force measuring apparatus (107) is connected to the second measurement signal connection (55);

∘ a transparent cylinder (115) which is arranged on the base plate (49) with a vertical axis, with the second connection (50) at the lower end and an outflow opening (116) which is arranged thereabove at the side and to which different opening elements (117) can be interchangeably fastened, a shaft (118) which is open at the top and which is arranged laterally adjacent to the cylinder (115) and which is open toward the outflow opening (116), with an at least transparent front wall (119) which is open at the bottom toward the first outlet (51), which is configured as a second opening (101) in the base plate (49), wherein the shaft (118) is open at the top above the outflow opening (116) and a length measuring apparatus (120) is present which is positioned on the upper edge of the shaft (118) and which can be positioned at different spacings from the outflow opening (116) for measuring the spacing between a test fluid jet emerging from the outflow opening (116) and the upper edge of the shaft (118), wherein the second pressure connection (53) is arranged at the bottom on the cylinder (115) and the second pressure connection (53) is arranged on a tank (123) on the base plate (49);

∘ a horizontal venturi nozzle (124) which consists of a transparent material and which is held above the base plate (49), and which is connected at one end to the second connection (50) and which is connected at the other end via an outlet line (78) to the first outlet (51) of the base plate (49), wherein pressure measuring bores which are connected to second pressure connections and second reference pressure connections (53.1 to 53.8, 54) protruding from the outer face of the venturi nozzle are present at different points of the nozzle and diffuser of the venturi nozzle (124), wherein a pressure lance (126) can be positioned into the venturi nozzle (124) from the other end through a sealing element (125) and with the inlet opening (127) at different axial positions in the venturi nozzle (124), and the pressure lance (126) is connected at the other end to a second pressure connection (53.7);

∘ a plurality of horizontal pipes (57.1 to 57.7) of equal length, having different fittings which are held in parallel adjacent to one another on the base plate (49) and which are preferably selected from a pipe with a large internal diameter and built-in nozzle, a pipe with a large internal diameter and built-in orifice, a pipe with a small internal diameter and built-in nozzle, a pipe with a small internal diameter, S-bend and built-in nozzle, a pipe with a small internal diameter, sharp-edged S-bend and built-in nozzle, a pipe with a small internal diameter, double S-bend and built-in nozzle and a pipe with a small internal diameter, built-in valve and built-in nozzle, wherein the small internal diameter is a smaller internal diameter than the large internal diameter, wherein the pipes (57.1 to 57.7) are connected at first pipe ends to a distributor block (128) which has the second connection (50) and a second pressure connection (53) and the pipes (57.1 to 57.7) are connected via hand levers (129.1 to 129.7) to a drainage block (130) which has a second reference pressure connection (54) and is connected via an outlet line (78) to the first outlet (51) in the base plate (49);

∘ horizontal pipes (57.1, 57.2) and pipe bundles (131.1 to 131.4) which have different internal diameters, which are held adjacent to one another on the base plate (49) and which have in each case the second connection (50.1 to 50.4) at first pipe ends, the second pipe ends thereof opening out in each case above a second opening (101) in the base plate (49), which second opening extends transversely to the pipes and forms the outlet (51) and at the edge remote from the pipes and pipe bundles and at the edges parallel to the pipes and pipe bundles is encompassed by spray protection walls (138, 139.1, 139.2) protruding vertically from the base plate (49), wherein the pipes (57.1, 57.2) and pipe bundles (131.1 to 131.4) in each case have a second pressure connection (53.1 to 53.6) and a first venting valve (134.1 to 134.6) at a spacing from the second connection (50.1 to 50.6), and a second reference pressure connection (54.1 to 54.6) and a second venting valve (136.1 to 136.6) at a further spacing from the second connection, and optionally a pipe bundle has a second pressure connection (53.7) and a third venting valve (137) at a shorter spacing from the second connection;

◦ horizontal pipes (57.1 to 57.4) which are held adjacent to one another on the base plate (49), comprising a hydraulically smooth pipe (57.1), a hydraulically rough pipe (57.2) and a rectangular pipe (57.3) which have in each case a second connection (50.1 to 50.4) at a first pipe end, a second pressure connection (53.1 to 53.3) at a spacing therefrom and a second reference pressure connection (54.1 to 54.3) at a further spacing therefrom, and a pipe (57.4) with more than three pressure measuring bores along an inlet section, the two outer ones thereof being connected to a second reference pressure connection (54.1, 54.2) and the other ones thereof in each case being connected to a second pressure connection (53.1 to 53.7), wherein all of the pipes have a second connection at the first pipe end and only the pipe (57.4) with the more than three pressure measuring bores also has a second connection (50.4) at the second pipe end, and the second pipe ends of all of the pipes (57.1 to 57.4) open out above a second opening (101) in the base plate (49), which second opening extends transversely to the pipes and forms the first outlet (51) and at the edge remote from the pipes (57.1 to 57.4) and at the side edges parallel to the pipes is encompassed by spray protection walls (138, 139.1, 139.2) protruding vertically from the base plate (49);

◦ a horizontal flow channel (143) on the base plate (49) with at least one first front wall (119) consisting of a transparent material, a second connection (50) at the one end of the flow channel (143) and a connection to the first outlet (51) at the other end (of the flow channel (143), a plurality of fittings (150) which can be inserted in the flow channel (143) and fixed therein by means of magnets and a fixedly mountable slot nozzle (146) for demonstrating energy levels and losses and determining flow rates when flowing through the flow channel (143).

22. The test module according to claim 21, comprising a second reference pressure connection (54) and at least one second pressure connection (53) which are connected to the test arrangement and/or at least one second measurement signal connection (55) which is connected to an electrical measuring sensor (99, 100, 107) in the test set-up, and/or second electrical power connections (86.1, 86.2), for connecting to an electrical voltage source, which are connected to an electrical consumer on the base plate (49).

23. The test module according to claim 21 or 22, which comprises an RFID, a readable identifier with an identification of the test module (48) being stored thereon.

24. A system for performing flow assays comprising a device (1) according to one of claims 1 to 20 and at least one test module (48.1 to 48.11) for performing flow assays, comprising

• a base plate (49) for positioning on a placement surface (6) and covering a first opening (7), which is configured therein, relative to a storage container (24) of a device according to claim 1,
• a test arrangement for flow assays arranged on the base plate (49),
• a second connection (50) for supplying test fluid into the test arrangement by means of a first hose,
• a first outlet (51) for test fluid on the lower face of the base plate (49), which first outlet is connected to the test arrangement via an apparatus for conducting test fluid,
• and/or a second outlet (52) for test fluid above the base plate (49) for connecting to a drainage line.

25. The system according to claim 24, comprising at least one test module according to one of claims 21 to 23.

**26.** The system according to claim 24 or 25, comprising a movable shelving rack (151) with a plurality of shelves (154) for storing the device (1) and a plurality of test modules (48.1 to 48.11).

## Revendications

**1.** Dispositif destiné à la mise en œuvre d'essais mécaniques d'écoulement, comportant

- un boîtier de table (2) doté d'une paroi de boîtier supérieure horizontale (5) dotée d'une surface de pose (6) sur le côté supérieur et une première ouverture (7) formée dans celle-ci pour le montage d'un module d'essai (48) doté d'une plaque de base (49) et d'un ensemble d'essai disposé sur celle-ci pour des essais mécaniques d'écoulement,
- un premier raccord (11) accessible depuis l'extérieur pour un tuyau au niveau d'une paroi de boîtier (10), de sorte que le premier raccord peut être relié au moyen d'un premier tuyau à un deuxième raccord (50) du module d'essai (48) pour l'introduction d'un liquide d'essai dans l'ensemble d'essai lorsque le module d'essai (48) est monté sur la surface de pose (6),
- un récipient de stockage (24) en forme de cuvette disposé dans le boîtier de table (2) pour du liquide d'essai, lequel est accessible directement par le haut à travers la première ouverture (7) dans la surface de pose (6), de sorte que du liquide d'essai peut être évacué hors de l'ensemble d'essai vers le récipient de stockage (24) à travers une première évacuation (51) de l'ensemble d'essai au niveau du côté inférieur de la plaque de base (49) lorsque le module d'essai (48) est monté sur la surface de pose (6),
- une première pompe (12) disposée dans le boîtier de table (2), laquelle est reliée côté entrée à l'espace intérieur du récipient de stockage (24) et côté sortie au premier raccord (11),
- un moteur électrique disposé dans le boîtier de table (2) et couplé à la première pompe (12) et
- un système de commande électrique (45) disposé dans le boîtier de table (2) et relié au moteur électrique, lequel est conçu pour régler la vitesse de la première pompe (12).

**2.** Dispositif selon la revendication 1, dans lequel un épaulement intérieur (8) décalé vers le bas par rapport à la surface de pose (6) entoure le bord intérieur de la première ouverture (7), pour l'appui du bord extérieur de la plaque de base (49).

**3.** Dispositif selon la revendication 1 ou 2, dans lequel au moins une couche de mousse à pores ouverts (25, 26) est disposée dans l'espace intérieur du récipient de stockage (24).

**4.** Dispositif selon la revendication 3, dans lequel une première couche de mousse à pores ouverts (25) et sur celle-ci une deuxième couche de mousse à pores ouverts (26) sont disposées dans l'espace intérieur, dans lequel la deuxième couche est plus fine que la première couche et la deuxième mousse à pores ouverts a des pores plus fins que la première mousse à pores ouverts.

**5.** Dispositif selon l'une des revendications 1 à 4, dans lequel un capteur de mesure de flux volumique (28), de préférence un capteur de mesure inductif magnétique, est disposé dans une première conduite (27) entre la première pompe (12) et le premier raccord (11) pour la mesure du flux volumétrique du liquide d'essai.

**6.** Dispositif selon l'une des revendications 1 à 5, dans lequel un premier raccord de pression de référence (15) et au moins un premier raccord de pression (14.1 à 14.7) sont disposés sur une paroi de boîtier (10) du boîtier de table (2) de façon accessible depuis l'extérieur et au moins un capteur de pression (30.1 à 30.3) destiné à mesurer une différence de pression est disposé dans le boîtier de table (2), lequel est relié au premier raccord de pression de référence (15) par le biais d'une deuxième conduite (31) et au premier raccord de pression (14.1 à 14.7) par le biais d'une troisième conduite (32), de sorte que le premier raccord de pression de référence (15) peut être relié à un deuxième raccord de pression de référence (54) d'un ensemble d'essai par le biais d'un deuxième tuyau et le premier raccord de pression (14.1 à 14.7) peut être relié à un deuxième raccord de pression (53) de l'ensemble d'essai par le biais d'un troisième tuyau lorsque le module d'essai (48) est monté sur la surface de pose (6).

**7.** Dispositif selon la revendication 6, dans lequel le capteur de pression (30.1 à 30.3) est relié à différents premiers raccords de pression (14.1 à 14.7) par le biais de soupapes magnétiques (33.1 à 33.7).

**8.** Dispositif selon la revendication 6 ou 7, lequel comporte plusieurs capteurs de pression (30.1 à 30.3) montés en parallèle avec différentes plages de mesure.

**9.** Dispositif selon l'une des revendications 1 à 8, dans lequel un capteur de mesure de température (29) est disposé dans le boîtier de table (2), lequel s'engage dans la première conduite (27) entre la première pompe (12) et le premier raccord (11) ou dans l'espace intérieur du récipient de stockage (24), afin de mesurer la température du liquide d'essai.

**10.** Dispositif selon l'une des revendications 1 à 9, dans lequel un système de chauffage (37) et/ou un système de refroidissement (38) sont disposés dans le boîtier de table (2), lesquels sont intégrés dans une conduite de circulation (36) dans laquelle est disposée une deuxième pompe (35) et/ou dans le récipient de stockage (24), afin de chauffer et/ou de refroidir le liquide d'essai.

**11.** Dispositif selon la revendication 10, dans lequel le système de chauffage (37) est un chauffage à résistance électrique et/ou dans lequel le système de refroidissement (38) est un échangeur de chaleur, lequel est relié à des raccords de liquide de refroidissement (21.1, 21.2) disposés au niveau d'une paroi de boîtier, lesquels sont accessibles depuis l'extérieur, afin de relier celui-ci à un groupe d'eau glacée ou à une autre source de liquide de refroidissement au moyen d'un quatrième et d'un cinquième tuyau.

**12.** Dispositif selon l'une des revendications 1 à 11, lequel comporte un système d'aération des systèmes de mesure de la pression différentielle (30.1 à 30.3), lequel comporte la conduite de circulation (36) et la deuxième pompe (35) disposée dans celle-ci, ainsi que des soupapes magnétiques (33.1 à 33.7) au moyen desquelles le liquide d'essai peut être sélectivement repompé à travers une deuxième conduite (31) entre le capteur de pression (30.1 à 30.3) et le premier raccord de pression de référence (15) et à travers un deuxième tuyau raccordé à celle-ci et l'ensemble d'essai, relié à celui-ci par le biais du deuxième raccord de pression de référence (54), d'un module d'essai (48) monté sur la surface de pose (6) et de là vers le récipient de stockage (24), ou repompé à travers une troisième conduite (32) entre le capteur de pression (30.1 à 30.3) et le premier raccord de pression (14.1 à 14.7) et à travers un troisième tuyau raccordé à celle-ci et l'ensemble d'essai relié à celui-ci par le biais du deuxième raccord de pression (53), vers le récipient de stockage (24).

**13.** Dispositif selon l'une des revendications 1 à 12, dans lequel la première pompe (12) est une pompe centrifuge et/ou dans lequel la première pompe (12) est une pompe submersible et/ou dans lequel la deuxième pompe (35) est une pompe centrifuge et/ou dans lequel la deuxième pompe (35) est une pompe submersible.

**14.** Dispositif selon l'une des revendications 1 à 13, lequel comporte un ordinateur (45) et un écran tactile (16) accessible depuis l'extérieur relié à celui-ci, disposé dans une paroi du boîtier de table (2), dans lequel l'ordinateur (45) est conçu pour afficher des informations sur le dispositif (1) et/ou le module d'essai (48) et/ou les contenus didactiques et/ou le système d'essai et/ou la réalisation des essais et/ou des résultats de mesure et/ou des évaluations de résultats de mesure sur l'écran tactile (16) et/ou pour commander l'aération des systèmes de mesure de la pression différentielle (30.1 à 30.3) et/ou la réalisation d'essais et/ou l'acquisition de résultats de mesure et/ou l'évaluation de résultats de mesure en fonction d'entrées par le biais de l'écran tactile (16).

**15.** Dispositif selon la revendication 14, dans lequel l'ordinateur (45) est capable de se connecter à Internet et/ou lequel comporte un point d'accès WLAN mis en réseau avec l'ordinateur.

**16.** Dispositif selon l'une des revendications 1 à 15, lequel comporte un appareil de lecture (47) relié à l'ordinateur (45) pour une RFID (56), lequel est conçu pour lire un identifiant stocké sur une RFID (56) d'un module d'essai (48) lorsque celui-ci est monté sur la surface de pose, dans lequel l'ordinateur (45) est conçu pour commander le déroulement du programme en fonction de l'identifiant lu à partir de la RFID (56).

**17.** Dispositif selon l'une quelconque des revendications 1 à 16, dans lequel le boîtier de table (2) présente au moins une première borne de signal de mesure (19) sur une paroi de boîtier (10), laquelle est reliée à l'ordinateur (45), accessible depuis l'extérieur et apte à être reliée par le biais d'un premier câble électrique par le biais d'une deuxième borne de signal de mesure à un capteur de mesure électrique (99, 100, 107) sur un module d'essai (48) lorsque celui-ci est monté sur la surface de pose (6).

**18.** Dispositif selon l'une des revendications 1 à 17, dans lequel le boîtier de table (2) comporte une partie inférieure (3) avec la surface de pose (6) sur le côté supérieur et une armoire électrique (4) faisant saillie vers le haut sur le bord arrière de la partie inférieure (3), dans lequel le récipient de stockage (24), la première pompe (12) et le cas échéant la deuxième pompe (35) sont disposés dans la partie inférieure (3), et le système de commande et le cas échéant les capteurs de mesure (28, 29) et le cas échéant l'ordinateur (45) et le cas échéant l'écran tactile (16) sont disposés dans l'armoire électrique (4).

**19.** Dispositif selon la revendication 18, dans lequel le premier raccord (11) et le cas échéant le premier raccord de pression de référence (15) et le premier raccord de pression (14.1 à 14.7) et le cas échéant un premier raccord de signal de mesure (19) accessible depuis l'extérieur pour un capteur de mesure électrique externe (20) et le cas échéant des premières prises de courant électriques accessibles depuis l'extérieur pour un consommateur externe et le cas échéant l'écran tactile (16) sont disposés dans une paroi de boîtier avant (10) de l'armoire électrique (4), laquelle est tournée vers la surface de pose (6).

20. Dispositif selon l'une des revendications 1 à 19, dans lequel le boîtier de table (2) comporte des poignées (9) permettant de porter le boîtier de table.

21. Module d'essai destiné à la mise en œuvre d'essais mécaniques d'écoulement, comportant

   • une plaque de base (49) destinée à être montée sur une surface de pose (6) et à recouvrir une première ouverture (7) formée dans celle-ci vers un récipient de stockage (24) d'un dispositif selon la revendication 1,
   • un ensemble d'essai disposé sur la plaque de base (49) pour des essais mécaniques d'écoulement,
   • un deuxième raccord (50) pour l'introduction de liquide d'essai dans l'ensemble d'essai au moyen d'un premier tuyau,
   • une première évacuation (51) pour du liquide d'essai sur le côté inférieur de la plaque de base (49), laquelle est reliée à l'ensemble d'essai par le biais d'un système de guidage de liquide d'essai,
   • et/ou une deuxième évacuation (52) pour du liquide d'essai au-dessus de la plaque de base (49) pour le raccordement à une conduite de refoulement, et
   ◦ l'un des ensembles d'essai suivants
   ◦ un conduit horizontal (57) maintenu sur la plaque de base, constitué d'un matériau transparent, un système d'alimentation (58) pour un liquide de marquage entre une première extrémité de conduit (59) du conduit (57) et le deuxième raccord (50), un récipient (60) maintenu au-dessus du système d'alimentation (58) de liquide de marquage, une soupape de dosage (61.1) disposée dans une conduite d'alimentation (62) entre le récipient (60) et le système d'alimentation (58), un coude tubulaire (64) relié à la deuxième extrémité de conduit (63) du conduit (57), constitué d'un matériau transparent avec une deuxième évacuation (52) à l'autre extrémité pour le raccordement à une conduite de refoulement ou pour le raccordement à une conduite d'évacuation vers une première évacuation (51) dans un alésage (65) de la plaque de base (49) ;
   ◦ au moins un conduit horizontal (57) maintenu sur la plaque de base, lequel est relié au deuxième raccord (50) au niveau d'une première extrémité de conduit (59) par le biais d'un embout (66) ou d'une entrée à arêtes vives (67) et dont la deuxième extrémité de conduit (63) est reliée à la première évacuation (51) par le biais d'un récipient de collecte (68) pour du liquide d'essai, dans lequel une canule (71) s'engageant dans le conduit (57) peut être déplacée transversalement à la section transversale de conduit dans le récipient de collecte (68) au moyen d'un système de déplacement (69) et la canule (71) est reliée à un deuxième raccord de pression (53) ;
   ◦ un canal d'écoulement vertical (76) maintenu sur la plaque de base, avec une plaque frontale transparente (77), lequel est relié sur le bas au deuxième raccord (50) et sur le haut à la première évacuation (51) par le biais d'au moins une conduite d'évacuation (78.1, 78.2), dans lequel est disposé ou peut être disposé au moins un corps d'essai (80.1, 80.2), dans lequel est disposée une première électrode (81) enjambant au moins partiellement la section transversale du canal d'écoulement (76) sous le corps d'essai (80.1, 80.2) et dans lequel est disposée une deuxième électrode (84), dans lequel la première électrode (81) et la deuxième électrode (84) sont reliées à des deuxièmes prises de courant électriques (86.1, 86.2) pour le raccordement d'une source de tension électrique (HM 250.03) ;
   ◦ un conduit (57) maintenu sur la plaque de base, constitué d'un matériau transparent, lequel présente le deuxième raccord (50) à une première extrémité de conduit (59), suivi d'une première section de conduit (94) avec un diamètre plus grand, suivie d'une section de transition (95) de rétrécissant de façon conique ou avec une autre forme, suivie d'une deuxième section de conduit (96) avec un diamètre plus petit et lequel est relié à la première évacuation (51) à l'autre extrémité par le biais d'une conduite d'évacuation (78), dans lequel une première roue à aubes (97) est disposée dans la première section de conduit (94) et une deuxième roue à aubes (98) est disposée dans la deuxième section de conduit (96), un premier système de détection (99) est disposé à côté de la première section de conduit (94) pour la détection de la vitesse de rotation de la première roue à aubes (97), un deuxième système de détection (100) est disposé à côté de la deuxième section de conduit (96) pour la détection de la vitesse de rotation de la deuxième roue à aubes (98), et les premier et deuxième systèmes de détection (99, 100) sont reliés à des deuxièmes raccords de signal de mesure (55) ;
   ◦ un cylindre de réception (102) fermé sur le dessus et transparent, avec un axe vertical, monté sur le bord de la première évacuation (51) conçue comme une deuxième ouverture (101) de la plaque de base (49), une buse (66) orientée verticalement vers le haut au-dessus de la première ouverture dans le cylindre de réception (102), reliée au deuxième raccord, un élément d'impact (106) maintenu verticalement au-dessus de la buse (66) sur un bras (103.1) d'un levier (105) monté de façon pivotante sur un support (104), un système de mesure de force (107) s'appuyant d'une part sur une butée (108) et d'autre part sur l'autre bras (103.2) du levier (105), dans lequel l'entrée de la buse (66) est reliée au deuxième raccord de pression (53) et le système de mesure de force (107) est relié au deuxième raccord de signal de mesure (55) ;

◦ un cylindre transparent (115) disposé avec un axe vertical sur la plaque de base (49), avec le deuxième raccord (50) à l'extrémité inférieure et une ouverture d'écoulement (116) disposée au-dessus, sur le côté où différents éléments d'ouverture (117) peuvent être fixés de façon remplaçable, un puits (118) ouvert sur le haut, disposé latéralement à côté du cylindre (115) et ouvert vers l'ouverture d'écoulement (116), avec une paroi avant (119) au moins transparente, lequel est ouvert sur le bas vers la première évacuation (51) conçue comme une deuxième ouverture (101) dans la plaque de base (49), dans lequel le puits (118) est ouvert sur le haut au-dessus de l'ouverture d'écoulement (116) et il est prévu un système de mesure de longueur (120) monté sur le bord supérieur du puits (118), lequel peut être positionné à différentes distances de l'ouverture d'écoulement (116) pour mesurer la distance entre un jet de liquide d'essai sortant de l'ouverture d'écoulement (116) et le bord supérieur du puits (118), dans lequel le deuxième raccord de pression (53) est disposé en bas sur le cylindre (115) et le deuxième raccord de pression (53) est disposé sur un bassin (123) sur la plaque de base (49) ;

◦ une buse Venturi horizontale (124) maintenue au-dessus de la plaque de base (49), constituée d'un matériau transparent, laquelle est reliée par une extrémité au deuxième raccord (50) et par l'autre extrémité à la première évacuation (51) de la plaque de base (49) par le biais d'une conduite d'évacuation (78), dans lequel des alésages de mesure de pression sont prévus à différents endroits de la buse et du diffuseur de la buse Venturi (124), lesquels sont reliés à des deuxièmes raccords de pression et des deuxièmes raccords de pression de référence (53.1 à 53.7, 54) faisant saillie à partir du côté extérieur de la buse Venturi, dans lequel une lance de pression (126) peut être positionnée dans la buse Venturi (124) par l'autre extrémité à travers un élément d'étanchéité (125) et avec l'ouverture d'entrée (127) à différentes positions axiales dans la buse Venturi (124), et la lance de pression (126) est reliée à un deuxième raccord de pression (53.7) par l'autre extrémité ;

◦ plusieurs conduits horizontaux de longueur égale (57.1 à 57.7) avec plusieurs composants internes, lesquels sont maintenus parallèlement côte à côte sur la plaque de base (49), lesquels sont sélectionnés de préférence parmi un conduit à grand diamètre intérieur et buse intégrée, un conduit à grand diamètre intérieur et obturateur intégré, un conduit à petit diamètre intérieur et buse intégrée, un conduit à petit diamètre intérieur, courbure en S et buse intégrée, un conduit à petit diamètre intérieur, courbure en S à arêtes vives et buse intégrée, un conduit à petit diamètre intérieur, double courbure en S et buse intégrée et un conduit à petit diamètre intérieur, soupape intégrée et buse intégrée, dans lequel le petit diamètre intérieur est un diamètre intérieur plus petit que le grand diamètre intérieur, dans lequel les conduits (57.1 à 57.7) sont reliés à un bloc de distribution (128) par des premières extrémités de conduit, lequel présente le deuxième raccord (50) et un deuxième raccord de pression (53), et les conduits (57.1 à 57.7) sont reliés à un bloc d'écoulement (130) par le biais de robinets manuels (129.1 à 129.7), lequel présente un deuxième raccord de pression de référence (54) et est relié à la première évacuation (51) dans la plaque de base (49) par le biais d'une conduite d'évacuation (78) ;

◦ des conduits horizontaux (57.1, 57.2) et des faisceaux de conduits (131.1 à 131.4) de différents diamètres intérieurs maintenus côte à côte sur la plaque de base (49), lesquels présentent respectivement le deuxième raccord (50.1 à 50.4) à des premières extrémités de conduit et dont les deuxièmes extrémités de conduit débouchent respectivement au-dessus d'une deuxième ouverture (101) formant l'évacuation (51) dans la plaque de base (49), s'étendant transversalement aux conduits, laquelle est encadrée par des parois de protection contre les éclaboussures (138, 139.1, 139.2) s'étendant verticalement à partir de la plaque de base (49) sur le bord éloigné des conduits et faisceaux de conduits et sur des bords parallèles aux conduits et faisceaux de conduits, dans lequel les conduits (57.1, 57.2) et les faisceaux de conduits (131.1 à 131.4) présentent respectivement un deuxième raccord de pression (53.1 à 53.6) et une première soupape d'aération (134.1 à 134.6) à une distance du deuxième raccord (50.1 à 50.6) et un deuxième raccord de pression de référence (54.1 à 54.6) et une deuxième soupape d'aération (136.1 à 136.6) à une autre distance du deuxième raccord et un faisceau de conduits présente le cas échéant un deuxième raccord de pression (53.7) et une troisième soupape d'aération (137) à une distance moins éloignée du deuxième raccord;

◦ des conduits horizontaux (57.1 à 57.4) maintenus côte à côte sur la plaque de base (49) comportant un conduit hydrauliquement lisse (57.1), un conduit hydrauliquement rugueux (57.2) et un conduit rectangulaire (57.3), lesquels présentent respectivement un deuxième raccord (50.1 à 50.4) au niveau d'une première extrémité de conduit, un deuxième raccord de pression (53.1 à 53.3) à une distance de celui-ci et un deuxième raccord de pression de référence (54.1 à 54.3) à une autre distance de celui-ci, et un conduit (57.4) doté de plus de trois alésages de mesure de pression le long d'un trajet d'entrée, parmi lesquels les deux alésages situés à l'extérieur sont reliés à un deuxième raccord de pression de référence (54.1, 54.2) et les autres sont reliés respectivement à un deuxième raccord de pression (53.1 à 53.7), dans lequel tous les conduits présentent un deuxième raccord à la première extrémité de conduit et seul le conduit (57.4) doté des plus de trois alésages de mesure de pression présente également un deuxième raccord (50.4) à la deuxième extrémité de conduit et les deuxièmes extrémités de conduit de tous les conduits (57.1 à 57.4) débouchent au-dessus d'une deuxième ouverture (101) formant la première évacuation (51) dans la plaque de base (49), s'étendant transversalement aux conduits, laquelle est encadrée par des parois de protection contre les éclaboussures (138, 139.1, 139.2) s'étendant verticalement à partir de la plaque de base (49) sur le bord éloigné des conduits (57.1 à 57.4) et sur les bords latéraux parallèles aux conduits ;

◦ un canal d'écoulement horizontal (143) sur la plaque de base (49) avec au moins une paroi avant (119) constituée d'un matériau transparent, un deuxième raccord (50) à une deuxième du canal d'écoulement (143) et un raccordement à la première évacuation (51) à l'autre extrémité du canal d'écoulement (143), plusieurs composants (150) aptes à être placés dans le canal d'écoulement (143) et à être fixés dans celui-ci au moyen d'aimants, et une buse à fente (146) apte à être montée fixement pour la démonstration de niveaux d'énergie et de pertes ainsi que pour la détermination de débits lors de l'écoulement à travers le canal d'écoulement (143).

22. Module d'essai selon la revendication 21, comportant un deuxième raccord de pression de référence (54) et au moins un deuxième raccord de pression (53), lesquels sont reliés à l'ensemble d'essai, et/ou au moins un deuxième raccord de signal de mesure (55), lequel est relié à un capteur de mesure électrique (99, 100, 107) dans la structure d'essai, et/ou des deuxièmes prises de courant électriques (86.1, 86.2) pour le raccordement à une source de tension électrique, lesquelles sont reliées à un consommateur électrique sur la plaque de base (49).

23. Module d'essai selon la revendication 21 ou 22, lequel comporte une RFID (56), sur laquelle est stocké un identifiant lisible avec une identification du module d'essai (48).

24. Système pour la mise en œuvre d'essais mécaniques d'écoulement, comportant un dispositif (1) selon l'une des revendications 1 à 20 et au moins un module d'essai (48.1 à 48.11) pour la mise en œuvre d'essais mécaniques d'écoulement, comportant

• une plaque de base (49) destinée à être montée sur une surface de pose (6) et à recouvrir une première ouverture (7) formée dans celle-ci vers un récipient de stockage (24) d'un dispositif selon la revendication 1,
• un ensemble d'essai disposé sur la plaque de base (49) pour des essais mécaniques d'écoulement,
• un deuxième raccord (50) pour l'introduction de liquide d'essai dans l'ensemble d'essai au moyen d'un premier tuyau,
• une première évacuation (51) pour du liquide d'essai sur le côté inférieur de la plaque de base (49), laquelle est reliée à l'ensemble d'essai par le biais d'un système de guidage de liquide d'essai,
• et/ou une deuxième évacuation (52) pour du liquide d'essai au-dessus de la plaque de base (49) pour le raccordement à une conduite de refoulement.

25. Système selon la revendication 24, comportant au moins un module d'essai selon l'une des revendications 21 à 23.

26. Système selon la revendication 24 ou 25, comportant une étagère déplaçable (151) avec plusieurs fonds d'étagère (154) pour l'entreposage du dispositif (1) et de plusieurs modules d'essai (48.1 à 48.11).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

151

152

153

154

Fig. 21

## Fig. 22

Fig. 23

Fig. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202015106972 U1

- US 5324956 A

**In der Beschreibung aufgeführte Nicht-Patentliteratur**

- *Equipment for engineering education. Fluid mechanics*, 31 December 2018